(19) Europäisches Patentamt

European Patent Office

Office européen des brevets

(11) **EP 4 749 413 A1**

(12) **EUROPÄISCHE PATENTANMELDUNG**

(43) Veröffentlichungstag:
**27.05.2026  Patentblatt 2026/22**

(21) Anmeldenummer: **24214129.9**

(22) Anmeldetag: **20.11.2024**

(51) Internationale Patentklassifikation (IPC):
**G06F 3/042** (2006.01)   **G06F 3/01** (2006.01)
**G06F 3/03** (2006.01)   **G06F 3/0346** (2013.01)

(52) Gemeinsame Patentklassifikation (CPC):
**G06F 3/042; G06F 3/017; G06F 3/03; G06F 3/0346**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Deutsche Telekom AG**
**53113 Bonn (DE)**

(72) Erfinder: **Schmitt, Florian-Leon**
**53227 Bonn (DE)**

(74) Vertreter: **karo IP**
**Patentanwälte PartG mbB**
**Steinstraße 16-18**
**40212 Düsseldorf (DE)**

Bemerkungen:
Geänderte Patentansprüche gemäss Regel 137(2) EPÜ.

(54) **TRAGBARES GERÄT UND VERFAHREN ZUR GESTENBASIERTEN AUSWAHL VON OBJEKTEN IM 3D-RAUM**

(57)    Techniken zur gestenbasierten Auswahl eines Objekts in einem 3D-Raum mittels eines tragbaren Geräts, wobei das tragbare Gerät ein Kameramodul mit zumindest einem Kameraobjektiv und einen Prozessor zur Bildanalyse und für Berechnungen umfasst, umfassend die Schritte:
• Aufnehmen von Bilddaten des 3D-Raums mittels des Kameramoduls des tragbaren Geräts, wobei aus den Bilddaten ein 3D-Bildobjekt-Datenraum erzeugt wird, der Objekte aufweist, welche auswählbare Interaktionselemente repräsentieren;
• Erkennen eines Zeigemittels, insbesondere eines Arms eines Nutzers, unter Verwendung der Bilddaten und Erzeugen eines 3D-Zeigemittel-Vektors unter Verwendung der Bilddaten, wobei das Zeigemittel eine definierte Position relativ zum tragbaren Gerät aufweist, wobei der 3D-Zeigemittel-Vektor eine räumliche Richtung des Zeigemittels wiedergibt;
• Zusammenführen des 3D-Bildobjekt-Datenraums und des 3D-Zeigemittel-Vektors in ein gemeinsames Koordinatensystem, wobei der 3D-Zeigemittel-Vektor in dem Koordinatensystem auf ein Objekt des 3D-Bildobjekt-Datenraums zeigt;
• Auswählen dieses Objekts, auf das der 3D-Zeigemittel-Vektor zeigt, zur weiteren Verarbeitung durch das tragbare Gerät.

Fig. 1

EP 4 749 413 A1

**Beschreibung**

Die Erfindung betrifft ein Verfahren und ein tragbares Gerät zur gestenbasierten Auswahl von Objekten in einem dreidimensionalen Raum. Insbesondere betrifft die Erfindung ein tragbares Gerät, das mithilfe einer kamera- und sensorgestützten Bildverarbeitung und eines Zeigemittels, wie beispielsweise dem Arm des Nutzers, ein im Sichtfeld der Kamera befindliches Objekt erkennt und auswählt. Die Erfindung ist im Bereich der Mensch-Maschine-Interaktion angesiedelt und bezieht sich insbesondere auf Wearables und AI-basierte Systeme, die eine Gestensteuerung zur Objektauswahl verwenden.

Ein wachsender Markt im Mobilfunkbereich sind sogenannte Wearables. Während Smartwatches bereits seit Jahren als Erweiterung des Smartphones am Handgelenk getragen werden, hat die rasante Entwicklung im Bereich der Künstlichen Intelligenz (AI) zur Entstehung neuartiger Konzeptklassen wie "AI-Pins" geführt. Diese AI-Pins sind tragbare Geräte, die beispielsweise an der Brusttasche getragen werden und im Gegensatz zu anderen Wearables oft keinen Touchscreen besitzen. Stattdessen verfügen sie über eine nach vorn gerichtete Kamera, die Gesten des Nutzers, wie Hand- und Armbewegungen, erkennt und zur Steuerung des Geräts nutzt.

AI-Pins sind insbesondere auf AI-Funktionalitäten ausgelegt, die es erlauben, im 2D-Bildraum der Kamera erfasste Objekte im 3D-Gegenstandsraum (Objektraum) zu identifizieren und mit diesen zu interagieren. Eine zentrale Herausforderung bei der Entwicklung dieser Geräte ist die Auswahl eines Objekts im 3D-Raum durch einfache, intuitive Gesten. Denkbare Optionen zur Objektauswahl umfassen Sprachanweisungen, doch diese sind in ihrer Genauigkeit begrenzt und werden in lauter Umgebung oder in Situationen, in denen keine akustische Steuerung möglich ist, oft unzuverlässig oder ungeeignet.

Eine gestenbasierte Auswahl eines Objekts im 3D-Raum ohne sprachliche Eingaben oder zusätzliche Interaktionsmöglichkeiten wie Touchscreens wäre daher eine wünschenswerte Erweiterung des Funktionsumfangs von AI-Pins. Eine solche Lösung könnte den technischen Aufbau dieser Geräte erheblich vereinfachen und eine rein gestenbasierte Steuerung ermöglichen. Um dies zu erreichen, wäre es erforderlich, dass das Gerät durch die Kamera und eine zugehörige Bildverarbeitung die Position und Richtung eines Zeigemittels, wie etwa eines ausgestreckten Arms, zuverlässig erkennt und zur Steuerung nutzt. Ein solches System könnte nicht nur die Bedienung vereinfachen, sondern auch die Einsatzmöglichkeiten für AI-Pins erweitern, indem es z. B. eine direkte und präzise Auswahl von Objekten im 3D-Raum ermöglicht.

Aktuelle Entwicklungen im Bereich der Wearables und gestenbasierten Steuerungen zeigen, dass AI-Pins in Zukunft weitere gestengesteuerte Eingabemethoden nutzen könnten, um das Funktionsspektrum zu erweitern oder Sprachbefehle zu ergänzen oder zu ersetzen. Besonders AI-gestützte Systeme könnten auf erweiterte Algorithmen zur Objekterkennung zurückgreifen, die zusätzliche Informationen zu einem erkannten Objekt bereitstellen. Beispiele für solche Anwendungen umfassen etwa das Bereitstellen von Zusatzinformationen wie Öffnungszeiten oder Sonderangebote von Geschäften, eine automatisierte Kontaktaufnahme mit einer erkannten Person oder das Speichern von Bildern mit Metadaten wie der Aufnahme- oder Objektposition, beispielsweise bei der Dokumentation interessanter Architektur.

Es ist daher die Aufgabe der Erfindung, ein Verfahren und ein tragbares Gerät bereitzustellen, das eine intuitive Auswahl eines Objekts in einem 3D-Raum ermöglicht, indem ein Zeigemittel des Nutzers zur Objektauswahl verwendet wird. Hierbei soll die Anzahl der erforderlichen Hardwarekomponenten minimiert und eine einfache Bedienbarkeit sowie zuverlässige Funktionsweise sichergestellt werden.

Gelöst wird die Aufgabe mit den Merkmalen der unabhängigen Ansprüche.

Die Merkmale der verschiedenen im Folgenden beschriebenen Aspekte der Erfindung oder der verschiedenen Ausführungsbeispiele können miteinander kombiniert werden, sofern dies nicht ausdrücklich ausgeschlossen wird oder technisch unmöglich ist.

Darüber hinaus werden die Begriffe "erster", "zweiter", "dritter" und dergleichen in der Beschreibung und in den Ansprüchen zur Unterscheidung ähnlicher Elemente und nicht unbedingt zur Beschreibung einer sequentiellen oder chronologischen Reihenfolge verwendet. Es versteht sich, dass die so verwendeten Begriffe unter geeigneten Umständen austauschbar sind und dass die hierin beschriebenen Ausführungsformen der Erfindung auch in anderer Reihenfolge als hierin beschrieben oder dargestellt funktionieren können.

Erfindungsgemäß wird ein Verfahren zur gestenbasierten Auswahl eines Objekts in einem 3D-Raum mittels eines tragbaren Geräts bereitgestellt, wobei das tragbare Gerät ein Kameramodul mit zumindest einem Kameraobjektiv und einen Prozessor zur Bildanalyse und für Berechnungen umfasst, umfassend die Schritte:

- Aufnehmen von Bilddaten des 3D-Raums mittels des Kameramoduls des tragbaren Geräts, wobei aus den Bilddaten ein 3D-Bildobjekt-Datenraum erzeugt wird, der Objekte aufweist, welche auswählbare Interaktionselemente repräsentieren;

- Erkennen eines Zeigemittels, insbesondere eines Arms eines Nutzers, unter Verwendung der Bilddaten und Erzeugen eines 3D-Zeigemittel-Vektors unter Verwendung der Bilddaten, wobei das Zeigemittel eine definierte Position relativ zum tragbaren Gerät aufweist, wobei der 3D-Zeigemittel-Vektor eine räumliche Richtung des Zeigemittels wiedergibt;

• Zusammenführen des 3D-Bildobjekt-Datenraums und des 3D-Zeigemittel-Vektors in ein gemeinsames Koordinatensystem, wobei der 3D-Zeigemittel-Vektor in dem Koordinatensystem auf ein Objekt des 3D-Bildobjekt-Datenraums zeigt;

• Auswählen dieses Objekts, auf das der 3D-Zeigemittel-Vektor zeigt, zur weiteren Verarbeitung durch das tragbare Gerät.

○ Die weitere Verarbeitung kann beispielsweise im Fall eines internetfähigen Objektes umfassen, dass das tragbare Gerät Befehle an das Objekt sendet. Beispielsweise kann es sich bei dem Objekt um einen Fernseher handeln, der dann mittels des tragbaren Geräts gesteuert wird. Der Nutzer kann aber beispielsweise auch auf einen Kühlschrank zeigen und die weitere Verarbeitung kann dann umfassen, dass der Nutzer online Einkäufe mit Hilfe des tragbaren Gerätes vornehmen kann. Dies bedeutet also, dass die weitere Verarbeitung eine Interaktion mit dem ausgewählten Objekt sein kann, aber nicht sein muss. In jedem Fall dient die Auswahl des Objekts allerdings dazu, Skills des tragbaren Geräts zu aktivieren, die in einem Sinnzusammenhang mit dem Objekt stehen. Das tragbare Gerät schaltet demnach andere Skills frei je nachdem, ob das ausgewählte Objekt beispielsweise ein Fernseher oder eine Kaffeemaschine ist.

Der Kern des Verfahrens ist die gestenbasierte Auswahl eines Objekts, wobei das System durch den Prozessor des tragbaren Geräts räumliche Informationen des Zeigemittels und der Objekte im 3D-Raum integriert. Der 3D-Bildobjekt-Datenraum wird durch eine Bildanalyse erzeugt, die Objekte im Sichtfeld der Kamera identifiziert und diese als auswählbare Elemente verfügbar macht. Das Zeigemittel, beispielsweise ein Arm, gibt mit einem 3D-Vektor die räumliche Ausrichtung des Zeigemittels wieder, wodurch eine präzise Erfassung der Zeigerichtung und die Verknüpfung mit dem 3D-Bildobjekt-Datenraum ermöglicht wird. Die Methode kommt ohne zusätzliche externe Sensoren aus und bietet damit eine schlanke Hardwarelösung. Durch die räumliche Zuordnung des Zeigemittels und die direkte Verbindung der Vektordaten mit den Objektdaten wird eine intuitive und schnelle Objektauswahl möglich, die sich für AI-Pins und ähnliche Wearables eignet, welche auf einfache, gestengesteuerte Bedienung setzen.

In einer Ausführungsform wird der 3D-Bildobjekt-Datenraum durch Aufnahme von Bilddaten des 3D-Raums mittels des Kameramoduls des tragbaren Geräts erzeugt wird, wobei das Kameramodul entweder:

• zwei Objektive umfasst, die synchronisierte, aus unterschiedlichen Blickwinkeln aufgenommene Bilddaten erfassen und aus diesen Bilddaten mittels Triangulation 3D-Informationen des Raums extrahiert werden, oder

• ein einzelnes Objektiv umfasst, das zumindest zwei räumlich und zeitlich versetzte Bilder des 3D-Raums aufzeichnet, wobei durch eine Relativbewegung des tragbaren Geräts zwischen den Bildaufnahmen ein parallaxer Versatz erzeugt wird und aus den versetzten Bildern 3D-Informationen des Raums berechnet werden.

Diese Ausführungsform bietet zwei alternative Ansätze zur Erzeugung eines 3D-Bildobjekt-Datenraums durch das tragbare Gerät. Die Verwendung eines Dual-Objektiv-Kamerasystems ermöglicht die sofortige Erzeugung räumlicher Informationen mittels Triangulation, was eine hohe Genauigkeit bei der Objekterkennung und -lokalisierung erlaubt. Alternativ erlaubt die Einzel-Objektiv-Lösung eine 3D-Rekonstruktion durch parallaxenbasierte Bildaufnahmen, indem die Relativbewegung des Geräts ausgenutzt wird, um räumliche Tiefe zu berechnen. Diese Optionen bieten eine flexible Hardwarekonfiguration, bei der je nach Gerätetyp und Anwendung entweder ein höheres Maß an Präzision oder eine kosteneffiziente Konfiguration gewählt werden kann, was eine verbesserte Anpassungsfähigkeit der Technologie ermöglicht.

In einer Ausführungsform wird eine Translationsbewegung des tragbaren Geräts zwischen dem Aufzeichnen der räumlich versetzten Bilder von einem im tragbaren Gerät integrierten 3-Achs-Sensor erfasst, und die erfasste Translationsbewegung zur Berechnung der 3D-Informationen des 3D-Raums herangezogen.

Der integrierte 3-Achs-Sensor stellt sicher, dass jede Translationsbewegung des tragbaren Geräts zwischen den Bildaufnahmen präzise gemessen wird, wodurch die parallaxenbasierte Erzeugung des 3D-Bildobjekt-Datenraums optimiert wird. Durch die genaue Erfassung der Bewegungsdaten können räumliche Informationen mit höherer Genauigkeit berechnet werden, was die Zuverlässigkeit der Objekterkennung und -auswahl im Raum verbessert. Dies ist besonders vorteilhaft für die Ein-Objektiv-Variante, da die Translationsbewegungen zur Parallaxenermittlung genutzt werden können, ohne dass externe Sensoren oder komplizierte Kalibrierungen erforderlich sind. Dieser Ansatz ermöglicht eine effizientere, ressourcenschonende Berechnung des 3D-Datenraums.

In einer Ausführungsform wird der 3D-Zeigemittel-Vektor durch Berechnen der Position des Zeigemittels in einem Koordinatensystem des tragbaren Geräts bestimmt, indem ein 3D-Modell des Zeigemittels aus den Bilddaten des Kameramoduls rekonstruiert wird, wobei eine vorgegebene Länge des Zeigemittels und mindestens ein gemessener Bildpunkt der Spitze des Zeigemittels verwendet werden, um eine eindeutige 3D-Richtung zu berechnen, die in das Koordinatensystem des tragbaren Geräts transformiert wird.

Diese Ausführungsform ermöglicht eine präzise Erfassung der räumlichen Richtung des Zeigemittels durch Rekonstruktion eines 3D-Modells des Zeigemittels aus den Kameradaten. Die Berücksichtigung der Länge des Zeigemittels und spezifischer Bildpunkte, wie etwa der Armspitze, schafft eine verlässliche Grundlage für die Richtungsbestimmung. Durch die Transformation in das Koordinatensystem des tragbaren Geräts wird die räumliche Richtung des Zeigemittels exakt im Raum verankert, was die Genauigkeit der Objektauswahl signifikant steigert. Dieser Prozess ermöglicht eine natürliche und intuitive Zeigegeste und vermeidet die Notwendigkeit externer Messgeräte oder Kalibrierungsschritte.

In einer Ausführungsform wird der 3D-Zeigemittel-Vektor unter Verwendung eines am Zeigemittel des Nutzers angebrachten Funksignal-Senders und eines externen Angle-of-Arrival-Panels (AoA-Panel) bestimmt, das am Körper des Nutzers angebracht ist und konfiguriert ist, eine Raumrichtung und optional den Abstand zum Funksignal-Sender zu bestimmen, und wobei die Position des Funksignal-Senders relativ zum tragbaren Gerät im 3D-Raum durch die Messdaten des AoA-Panels ermittelt wird.

Die Verwendung eines Funksignal-Senders in Kombination mit einem Angle-of-Arrival-Panel (AoA-Panel) bietet eine präzise Methode zur Erfassung der räumlichen Richtung des Zeigemittels, indem die Position und Ausrichtung des Funksignal-Senders erfasst werden. Durch die Ermittlung von Distanz- und Winkelinformationen relativ zum tragbaren Gerät ermöglicht das System eine verbesserte Positionierung des Zeigemittels im 3D-Raum. Diese Technik unterstützt eine verlässliche Gestenerkennung und bietet eine Alternative zur alleinigen Bildverarbeitung, was in komplexeren Anwendungsszenarien nützlich ist. Der technische Effekt ist eine höhere Genauigkeit bei der Objektauswahl durch die Einbindung zusätzlicher räumlicher Informationen.

In einer Ausführungsform wird die definierte Position des Zeigemittels relativ zum tragbaren Gerät dem Prozessor durch ein Selfie bekannt gemacht, auf dem der Nutzer das tragbare Gerät an einer zur Nutzung vorgesehenen Position trägt.

In dieser Ausführungsform wird die definierte Position des Zeigemittels durch ein initiales Selfie des Nutzers festgelegt, wodurch die Position des Geräts und des Zeigemittels zueinander bestimmt wird. Der technische Effekt liegt darin, dass das System automatisch eine Kalibrierung der relativen Position durchführen kann, ohne dass aufwendige Kalibrierungsschritte erforderlich sind. Dies vereinfacht die Einrichtung und initiale Kalibrierung für den Nutzer erheblich und verbessert die Benutzerfreundlichkeit des Systems, indem die optimale Ausgangslage der Geräteposition gespeichert wird und zur zukünftigen Verarbeitung herangezogen werden kann

In einer Ausführungsform gibt der Nutzer zusätzlich seine Körpergröße an, wodurch es ermöglicht wird, dass alle anderen Proportionen des Nutzers, wie z.B. eine Armlänge, zumindest ausreichend extrapoliert werden können, um den 3D-Zeigemittel-Vektor im Raum und relativ zum tragbaren Gerät zu ermitteln.

Diese Ausführungsform erlaubt eine weitere Kalibrierung, indem der Nutzer seine Körpergröße angibt, aus der dann weitere Körperproportionen abgeleitet werden. Dadurch wird die Bestimmung der Armlänge und anderer relevanter Abmessungen des Zeigemittels deutlich vereinfacht, was den 3D-Zeigemittel-Vektor präziser im Raum verankert. Diese automatische Anpassung reduziert den Aufwand für eine detaillierte Vermessung des Nutzers und ermöglicht eine sofort einsatzbereite Kalibrierung für die Objektauswahl. Der technische Effekt ist eine verbesserte Genauigkeit bei der Bestimmung des Zeigewinkels durch den vereinfachten Kalibrierungsprozess.

In einer Ausführungsform wird ein Kalibrierungsschritt des Kameramoduls und des Zeigemittels durchgeführt, indem der Nutzer das Zeigemittel mit spezifischen Abmessungen in die Kamera hält.

Der Kalibrierungsschritt in dieser Ausführungsform bietet eine präzise Anpassung des Systems an die individuellen Abmessungen des Nutzers, indem das Zeigemittel, etwa der Arm, in die Kamera gehalten wird. Durch diese Kalibrierung erhält der Prozessor exakte Daten zur Länge und Position des Zeigemittels, was die Genauigkeit der späteren Gestenerkennung erhöht. Die spezifische Kalibrierung stellt sicher, dass der 3D-Zeigemittel-Vektor optimal und zuverlässig berechnet wird, unabhängig von den individuellen Abmessungen des Nutzers. Dies führt zu einer präzisen und personalisierten Steuerung des Geräts und reduziert die Notwendigkeit weiterer Eingaben oder Anpassungen.

In einer Ausführungsform gibt das tragbare Gerät eine Rückmeldung an den Nutzer, die das ausgewählte Objekt im 3D-Bildobjekt-Datenraum anzeigt.

Diese Ausführungsform sieht eine Rückmeldung vor, die dem Nutzer anzeigt, welches Objekt im 3D-Bildobjekt-Datenraum ausgewählt wurde. Dies kann durch akustische, visuelle oder haptische Signale geschehen. Der Vorteil liegt darin, dass der Nutzer sofort eine Bestätigung der Objektauswahl erhält, was die Interaktion mit dem System erheblich vereinfacht und Fehlbedienungen reduziert. Die Rückmeldung stellt eine direkte Verbindung zwischen der Zeigegeste und der Auswahl her und verbessert die Benutzerfreundlichkeit des Systems, da der Nutzer das ausgewählte Objekt gegebenenfalls überprüfen und seine Auswahl anpassen kann.

In einer Ausführungsform wird die Richtung des Zeigemittels durch das tragbare Gerät regelmäßig aktualisiert und das ausgewählte Objekt bei Bewegung des Zeigemittels angepasst.

Diese Ausführungsform ermöglicht eine dynamische Anpassung der Auswahl entsprechend den Bewegungen des Zeigemittels. Durch regelmäßige Aktualisierung der Richtung des Zeigemittels wird das System in die Lage versetzt, Änderungen in der Zeigegeste unmittelbar zu erkennen und das ausgewählte Objekt anzupassen. Der technische Effekt ist eine nahtlose Interaktion, die eine natürliche und intuitive Bedienung erlaubt. Die Fähigkeit, Bewegungen des Zeigemittels in Echtzeit zu verfolgen und die Auswahl entsprechend zu ändern, erhöht die Flexibilität und Präzision des Systems, was insbesondere bei sich bewegenden Objekten oder einer Änderung der Auswahlposition von Vorteil ist.

Gemäß einem zweiten Aspekt der Erfindung wird ein tragbares Gerät zur gestenbasierten Objektauswahl in einem 3D-Raum bereitgestellt, umfassend:

- ein Kameramodul mit zumindest einem Kameraobjektiv zur Aufnahme von Bilddaten, das am Träger frontal ausgerichtet ist, insbesondere kann das Kameramodul zwei Kameraobjektive aufweisen;

- einen Prozessor, der konfiguriert ist, die Bilddaten des Kameramoduls auszuwerten und einen 3D-Zeigemittel-Vektor zu erzeugen, der auf ein Objekt in einem 3D-Bildobjekt-Datenraum zeigt;

- eine Steuereinheit, die basierend auf der Position des 3D-Zeigemittel-Vektors ein Objekt im 3D-Raum auswählt;

- wobei das tragbare Gerät zur Ausführung der Schritte des Verfahrens eingerichtet ist.

Das tragbare Gerät ist insbesondere ein AI-Pin. Das tragbare Gerät kann aber beispielsweise auch ein Smartphone sein, welches der Nutzer so trägt, dass dessen Kamera objektiv nach vorne zeigt und dadurch Objekte im Objektraum wahrnehmen kann. Das tragbare Gerät weist insbesondere ein Funkmodul auf und ist internetfähig. Das tragbare Gerät integriert ein Kameramodul, das die Bilddaten zur Erzeugung des 3D-Bildobjekt-Datenraums erfasst, sowie einen Prozessor, der die Position und Richtung des Zeigemittels zur Objektauswahl berechnet. Das Gerät ist zur Durchführung der Verfahrensschritte aus den Verfahrensansprüchen eingerichtet, was eine flexible Hardwarebasis zur Implementierung der gestenbasierten Steuerung darstellt. Die Kompaktheit und Integration der Komponenten in ein tragbares Gerät ermöglicht eine eigenständige Lösung ohne externe Hardware. Dies verbessert die Benutzerfreundlichkeit und verringert den technischen Aufwand erheblich, während es gleichzeitig die Möglichkeit zur einfachen Steuerung durch Zeigegesten im 3D-Raum bietet.

In einer Ausführungsform umfasst das tragbare Gerät eine Schnittstelle zum Empfang von Richtungs- und Entfernungsdaten eines externen Angle-of-Arrival-Panels (AoA-Panel), wobei der Prozessor konfiguriert ist, den 3D-Zeigemittel-Vektor unter Verwendung der Daten des AoA-Panels zu verfeinern.

Diese Ausführungsform ermöglicht die Einbindung eines externen AoA-Panels zur Verbesserung der räumlichen Erfassung. Durch die Verknüpfung der Bilddaten mit Richtungs- und Entfernungsdaten des AoA-Panels kann der Prozessor die Position des Zeigemittels präziser berechnen. Der technische Effekt besteht in einer höheren Genauigkeit bei der Objektauswahl, was das Gerät für komplexe Umgebungen und anspruchsvollere Anwendungen geeignet macht.

In einer Ausführungsform das ferner einen 3-Achs-Sensor, der eine Bewegungsinformation des tragbaren Geräts erfasst und diese dem Prozessor zur Anpassung des 3D-Bildobjekt-Datenraums bereitstellt.

Die Integration eines 3-Achs-Sensors ermöglicht die Erfassung von Bewegungsdaten des tragbaren Geräts, was für die parallaxenbasierte 3D-Berechnung oder zur Kompensation von Bewegungen des Nutzers besonders vorteilhaft ist. Der technische Effekt liegt in der Möglichkeit, den 3D-Datenraum stabil zu halten und die Objektauswahl auch bei Bewegungen des Nutzers zuverlässig zu ermöglichen, was eine präzisere Gestenerkennung und somit eine genauere Auswahl gewährleistet.

In umfasst das Gerät eine Rückmeldeeinheit, die eine visuelle oder akustische Rückmeldung an den Nutzer über das ausgewählte Objekt bereitstellt.

Durch die Rückmeldeeinheit erhält der Nutzer eine unmittelbare Bestätigung der Objektauswahl, was eine verbesserte Interaktion und Benutzerführung ermöglicht. Der technische Effekt ist eine gesteigerte Interaktivität des Geräts, wodurch der Nutzer direkt Feedback zur Auswahl erhält und gegebenenfalls Korrekturen vornehmen kann, was eine präzise und zufriedenstellende Nutzung des Systems sicherstellt.

In einer Ausführungsform ist der Prozessor konfiguriert, die Länge des Zeigemittels unter Verwendung von Kalibrierungsdaten zu berechnen und diese zur Genauigkeitssteigerung des 3D-Zeigemittel-Vektors zu verwenden.

Der Prozessor ist hier so konfiguriert, dass er die Kalibrierungsdaten des Zeigemittels, etwa die Länge des Arms, nutzt, um den 3D-Zeigemittel-Vektor präzise zu berechnen. Diese individuelle Anpassung ermöglicht eine exakte Richtungsbestimmung des Zeigemittels, was die Genauigkeit des gesamten Systems bei der Objektauswahl im 3D-Raum steigert. Der technische Effekt ist, dass die exakte Länge des Zeigemittels als Referenzwert dient, wodurch die Auswahl im 3D-Raum optimiert und eine präzise Steuerung ermöglicht wird. Dies verringert zudem die Notwendigkeit zusätzlicher Kalibrierungsschritte und stellt eine konsistente Interaktion sicher.

Im Folgenden werden bevorzugte Ausführungsbeispiele der vorliegenden Erfindung unter Bezugnahme auf die beigefügten Figuren erläutert:

Fig. 1    zeigt ein erfindungsgemäßes tragbares Gerät zur gestenbasierten Objektauswahl.

Fig. 2    zeigt das erfindungsgemäße Verfahren zur gestenbasierten Objektauswahl mittels des tragbaren Geräts gemäß Fig. 1.

Im Folgenden werden zahlreiche Merkmale der vorliegenden Erfindung anhand von bevorzugten Ausführungsbeispielen näher erläutert. Die vorliegende Offenbarung ist nicht auf die konkret genannten Merkmalskombinationen beschränkt. Vielmehr können die hier genannten Merkmale beliebig zu erfindungsgemäßen Ausführungsformen kombiniert werden, sofern dies im Folgenden nicht ausdrücklich ausgeschlossen wird.

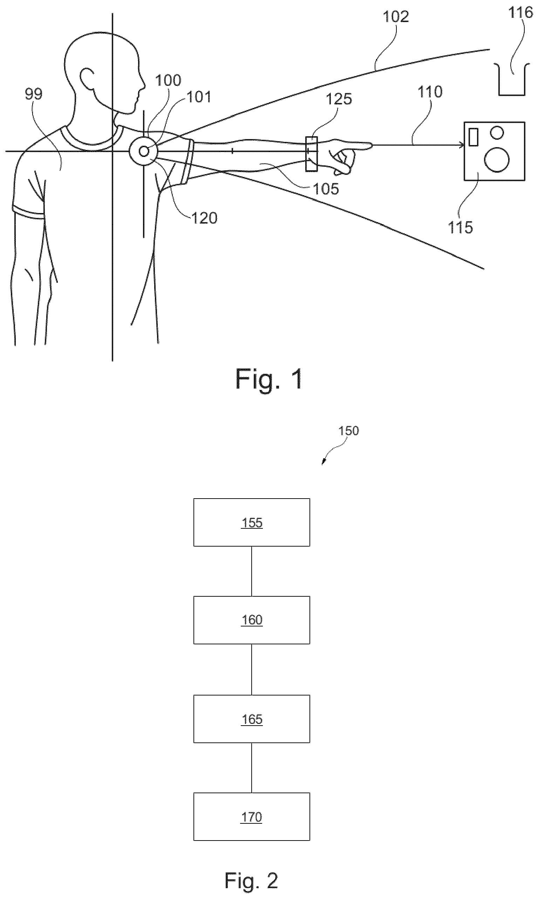

Fig. 1 zeigt einen Nutzer 99, der ein tragbares Gerät 100 zur gestenbasierten Objektauswahl im Bereich seiner linken Schulter trägt, wobei das tragbare Gerät 100, insbesondere ein AI-Pin 100 oder ein Smartphone 100, so angebracht ist, dass dessen Kameramodul 101 mit zumindest einem Kameraobjektiv vom Nutzer weggerichtet in einen Raum zeigt. Das tragbare Gerät 100 weist zumindest ein Kameraobjektiv auf. Mehrere Objekte 115, 116, insbesondere eine Vase 116 und eine Musikanlage 115, liegen innerhalb eines Sichtkegels 102 des Kameraobjektivs. Möchte der Nutzer 99 mittels des tragbaren Geräts 100 beispielsweise mit der Musikanlage 115 kommunizieren und diese steuern, muss das tragbare Gerät 100 die Musikanlage 115 als ausgewähltes Objekt erkennen. Hierzu zeigt der Nutzer mit einem Zeigemittel 105, insbesondere seinem Arm 105, in Richtung der Musikanlage 115. Das Kameramodul 101 des tragbaren Gerätes 100 nimmt den 3D-Raums in dem sich die Objekte 115, 116 auf und erkennt anhand dieser Bilddaten auch in welche Richtung der Arm 105 des Nutzers 99 zeigt und kann hierauf basierend einen 3D-Zeigemittel-Vektor 110 erstellen und analysieren auf welches Objekt, in diesem Fall also auf die Musikanlage 115, der Vektor 110 zeigt. Über ein Sprachbefehl, den der Nutzer an das tragbare Gerät 100 übergibt, kann die Musikanlage 115 gesteuert werden. Zur besseren Richtungserkennung des Arms 105 des Nutzers 99 kann das tragbare Gerät 100 zusätzlich ein sogenanntes AoA Panel 120 aufweisen und es kann ein Funksignal-Sender 125 am Handgelenk des Nutzers 99 befestigt sein.

Fig. 2 zeigt schematisch die Schritte des erfindungsgemäßen Verfahrens 150:

Schritt 155: Aufnehmen von Bilddaten des 3D-Raums mittels des Kameramoduls des tragbaren Geräts, wobei aus den Bilddaten ein 3D-Bildobjekt-Datenraum erzeugt wird, der Objekte aufweist, welche auswählbare Interaktionselemente repräsentieren;

Schritt 160: Erkennen eines Zeigemittels, insbesondere eines Arms eines Nutzers, unter Verwendung der Bilddaten und Erzeugen eines 3D-Zeigemittel-Vektors unter Verwendung der Bilddaten, wobei das Zeigemittel eine definierte Position relativ zum tragbaren Gerät aufweist, wobei der 3D-Zeigemittel-Vektor eine räumliche Richtung des Zeigemittels wiedergibt;

Schritt 165: Zusammenführen des 3D-Bildobjekt-Datenraums und des 3D-Zeigemittel-Vektors in ein gemeinsames Koordinatensystem, wobei der 3D-Zeigemittel-Vektor in dem Koordinatensystem auf ein Objekt des 3D-Bildobjekt-Datenraums zeigt;

Schritt 170: Auswählen dieses Objekts, auf das der 3D-Zeigemittel-Vektor zeigt, zur weiteren Verarbeitung durch das tragbare Gerät.

Nachstehend wird die Funktionsweise im Detail anhand von zwei Ausführungsbeispielen beschrieben. Es werden nachstehend zwei Varianten im Detail beschrieben: Variante 1, die ohne das AoA Panel 120 und den Funksignal-Sender 125 auskommt und Variante 2, die die Lösung unter Verwendung des AoA Panels 120 und des Funksignal-Senders 125 angibt.

Variante 1:

Das zentrale Problem, das mit der Erfindung gelöst wird, ist die bislang fehlende Möglichkeit, eine rein gestenbasierte Steuerung zur Objektauswahl in einem 3D-Raum mithilfe eines tragbaren Geräts ohne zusätzliche Eingabe- oder Interaktionsmöglichkeiten zu realisieren. Dabei soll die Auswahl von Objekten allein durch eine Zeigegeste, wie das Ausstrecken eines Arms oder Fingers, erfolgen, ohne dass dafür weitere technische Hilfsmittel als eine Kamera und eine darauf abgestimmte Bildverarbeitungsmöglichkeit notwendig sind.

Das technische Problem besteht darin, dass durch die alleinige Verwendung eines 2D-Bilds die absoluten Entfernungen von Objekten im 3D-Raum nicht direkt berechnet werden können, insbesondere wenn diese unterschiedliche Abstände zur Kamera aufweisen. Zudem wird der Zeigerarm im 2D-Bild der Kamera nicht als eindeutige 3D-Richtung erkannt, sondern nur als Spur im 2D-Bildraum dargestellt. Es fehlen daher entscheidende Informationen, um die exakte räumliche Richtung des Arms als Vektor im 3D-Raum zu bestimmen. Ein weiteres Problem besteht darin, dass selbst bei einer bekannten 3D-Richtung des Arms im Raum keine eindeutige Position im 2D-Bild bestimmt werden kann, die diese Richtung beschreibt. Der Grund liegt darin, dass die Kamera und die 3D-Wandebene meist nicht exakt parallel ausgerichtet sind und die Wandebene oft nicht senkrecht zur Blickrichtung der Kamera steht.

In der Erfindung wird das Zeigen auf ein Objekt durch den Arm des Nutzers umgesetzt und als Armzeiger oder Zeigerarm bezeichnet. Der Zeigerarm wird als technisches Mittel zur Richtungserkennung verwendet, wobei der Armvektor im Raum als 3D-Richtung betrachtet wird. In der Bildverarbeitung des tragbaren Geräts wird dieser Armvektor genutzt, um die Zeigegeste zu analysieren und eine entsprechende räumliche Richtung im 3D-Bildobjekt-Datenraum zu ermitteln.

Das erfindungsgemäße Verfahren gemäß Variante 1 setzt voraus, dass keine zusätzlichen technischen Hilfsmittel erforderlich sind, sondern lediglich ein tragbares Gerät, hier als AI-Pin bezeichnet, mit einer Kamera und einem Prozessor zur Bildverarbeitung. Die minimale Systemkonfiguration umfasst dabei die folgenden Merkmale:

- Eine digitale Kamera mit einer bekannten Brennweite und ausreichend bekanntem optischen Hauptpunkt als Symmetriepunkt für eine bekannte, radialsymmetrische Verzeichnung des Kameraobjektivs. Die Kamera ist bevorzugt mit einem Weitwinkelobjektiv ausgestattet, um ein möglichst breites Sichtfeld zu erfassen.
- Ein Prozessor, der die Bilddaten der Kamera in einem vorgegebenen Rhythmus digital ausliest und zur Objektauswahl im 3D-Bildobjekt-Datenraum verarbeitet. Der Prozessor analysiert die Bilddaten, um den Zeigerarm und das Objekt in den erfassten Bildsequenzen zu erkennen.

Optional kann ein 3-Achs-Sensor integriert sein, der die translatorischen Bewegungen der Kamera in einem kartesischen Koordinatensystem (x, y, z) erfasst. Die z-Achse ist dabei als Vertikale definiert, während die x- und y-Achsen in einer Ebene senkrecht zur z-Achse liegen. Vorteilhafterweise verläuft die x- oder y-Achse in Aufnahmerichtung der Kamera, was die Verarbeitung der Bewegungsdaten vereinfacht.

Falls notwendig, kann das tragbare Gerät über Ausgabemöglichkeiten verfügen, um das erkannte Objekt dem Nutzer oder anderen Personen über Lautsprecher, optische Projektionen oder drahtlose Kommunikationsschnittstellen mitzuteilen. Diese Ausgabemöglichkeiten sind jedoch optional und tragen nicht direkt zur Auswahl des Objekts im 3D-Bildobjekt-Datenraum bei.

Die Erfindung erfordert nicht zwingend den Einsatz von Künstlicher Intelligenz für die Gestenerkennung, da die Erkennung durch deterministische Algorithmen realisiert werden kann. Der AI-Pin kann daher auch als "Kamera-Prozessor-Pin" bezeichnet werden, wenn keine KI-basierte Funktionalität erforderlich ist. Der eigentliche technische Fortschritt dieser minimalen Systemkonfiguration liegt darin, dass ein 3D-Bildobjekt-Datenraum durch die Analyse von 2D-Bilddaten erzeugt wird und die Zeigegeste des Nutzers ohne zusätzliche Orientierungssensoren eine eindeutige Richtung im Raum ergibt.

Die Erfindung beschreibt eine geometrisch-algebraische Methode zur Bestimmung des Objekts im 3D-Raum, die auf der oben genannten Systemkonfiguration basiert und keine weiteren externen Hilfsmittel voraussetzt. Die Rechenleistung der Prozessoren des AI-Pins ist dabei ausreichend, da aktuelle Modelle, wie sie z.B. unter https://hu. ma.ne/ verfügbar sind, über AI-, Kommunikations-, Sprach- und Projektionseinheiten verfügen und höhere Leistungen aufweisen, als für die Umsetzung der Erfindung erforderlich ist. Es ist auch denkbar, dass der AI-Pin die Berechnungsergebnisse drahtlos an ein externes Gerät wie ein Smartphone oder eine Smartwatch übermittelt und dort zusätzliche Berechnungen durchführt, bevor die Ausgabe erfolgt.

Positionierung des AI-Pins und Grundannahmen für das Verfahren: Für das erfindungsgemäße Verfahren wird angenommen, dass der AI-Pin, gegebenenfalls als reduzierte Kamera-Prozessor-Einheit, statisch an der Vorderseite der Person auf Schulterhöhe mittig angebracht ist, etwa auf Höhe der Drehpunkte der Schultergelenke. Die Kamera des AI-Pins ist dabei nach vorne ausgerichtet und horizontal sowie senkrecht zur Verbindungslinie der beiden Drehpunkte der Schultergelenke positioniert. Die Kameraaufnahmeachse verläuft somit ausreichend genau horizontal, und die Bildebene ist ebenfalls horizontal ausgerichtet. Diese Anordnung stellt eine präzise und konsistente Erfassung der Bilddaten sicher. Sollte die Kamera von dieser Position abweichen, müssen die daraus resultierenden Abweichungen in Translation und Rotation dem Auswertungssystem bekannt sein, um die Bilddaten korrekt verarbeiten zu können.

Es wird weiter angenommen, dass der Nutzer das Zielobjekt im Sichtfeld der Kamera wahlweise mit dem linken oder rechten ausgestreckten Arm anvisiert und dass die Bildauswertung in der Lage ist, zu erkennen, welcher Arm für die Zeigegeste genutzt wird.

Erzeugung eines 3D-Bildobjekt-Datenraums: Das Verfahren erfordert die Erzeugung eines 3D-Bildobjekt-Datenraums, der die Lage der Objekte im Raum präzise bestimmt. Der 3D-Bildobjekt-Datenraum wird durch die Auswertung mehrerer 2D-Bilder der Kamera erstellt, wobei die Bilder unter verschiedenen Positionen aufgenommen werden, da der Nutzer sich zwischen den einzelnen Aufnahmen bewegt. Optional kann die Verschiebung bzw. Translation zwischen den Projektionszentren der Kamerabilder mit einem 3-Achs-Sensor ermittelt werden. Dieser Sensor liefert eine fortlaufende 3D-Positionsbestimmung und zeichnet die Translationen entlang der x-, y- und z-Achsen des kartesischen Koordinatensystems auf. Durch einen Zeitgeber werden die gemessenen Translationen den Aufnahmezeitpunkten der Bilder zugeordnet. Alternativ kann der Prozess der "Relativen Orientierung" und der "Bündelausgleichung" eingesetzt werden, um die Verschiebungen zwischen den Projektionszentren automatisch in einem relativen Maßstab zu berechnen. Merkmalsbestimmung und Relative Orientierung: Zur Identifizierung markanter Punkte im 3D-Bildobjekt-Datenraum werden in den Bildern mithilfe bekannter Interest-Operatoren, wie digitaler Filter zur Erkennung von markanten Bildmustern (z. B. Ecken, Linienkreuzungen, Farbkontraste), Merkmale lokalisiert. Die 2D-Bildkoordinaten dieser markanten Punkte werden in den jeweiligen Kamerabildern bestimmt und einem weiteren Verarbeitungsschritt unterzogen: der Relativen Orientierung. Für die Relative Orientierung werden zwei zeitlich aufeinander folgende Bilder herangezogen, deren Projektionszentren einen hinreichend großen Abstand in Bezug auf die Brennweite der Kamera aufweisen. Diese Bilder werden dann durch Zuordnung der markanten Punkte rechnerisch zueinander orientiert, wobei die markanten Punkte beider Bilder durch statistische Ausreißertests und sukzessive Neuzuordnung identifiziert werden.

Ergebnis der Relativen Orientierung: Erzeugung des 3D-Bildobjekt-Datenraummodells: Die Relative Orientierung führt zu einem Bildpaar, das so digital zueinander orientiert ist, dass die Bildstrahlen der zugeordneten markanten Punkte der beiden Bilder sich in einem 3D-Punkt des Objektraums schneiden. Auf diese Weise wird ein 3D-Bildobjekt-Datenraummodell erzeugt, bei dem die markanten Punkte in ihren relativen Positionen zueinander so angeordnet sind wie im tatsächlichen Objektraum. Zwischenpunkte auf Objektoberflächen können mithilfe bekannter Korrelationstechniken, die digitale Bildausschnitte aus beiden Bildern verwenden, ebenfalls mit 3D-Koordinaten versehen werden. Das Modell kann jedoch Lücken enthalten, wenn Objekte verdeckt werden oder aus dem Aufnahmebereich der Kamera verschwinden.

Bestimmung des Maßstabs im 3D-Bildobjekt-Datenraummodell: Das erzeugte 3D-Bildobjekt-Datenraummodell ist zunächst maßstabsfrei. Ein festgelegter Projektionszentrenabstand, zum Beispiel gleich 1, dient als Maßstabsfaktor für das Modell. Wenn jedoch der tatsächliche Projektionszentrenabstand durch den 3-Achs-Sensor ermittelt wurde, kann das Modell durch Skalierung im Maßstab a (wobei a der gemessene Abstand ist) in eine realitätsgetreue Skala übertragen werden.

Erweiterung durch Bündelausgleichung: Zur Verbesserung des 3D-Bildobjekt-Datenraummodells können zusätzliche Bilder aus verschiedenen Kamerapositionen ausgewertet werden, wobei Orientierungen und Positionen der Kameras als zusätzliche Parameter für die 3D-Koordinatenbestimmung der Objektpunkte eingeführt werden. Diese Methode der "Bündelausgleichung" erlaubt eine sukzessive Verbesserung der Genauigkeit der 3D-Punkte im Modell. Mit zunehmender Anzahl der Bildstrahlen zu einem Objektpunkt verbessert sich die Positionsgenauigkeit ausreichend genau gemäß der Formel

$$Genauigkeit\_neu = \frac{Genauigkeit\_alt}{\sqrt{n_{neu}/n_{alt}}}.$$

Wenn sich beispielsweise die Anzahl der Bildstrahlen zu einem Punkt um den Faktor 4 erhöht, verbessert sich die Positionsgenauigkeit ausreichend genau um den Faktor 2.

Erzeugung eines 3D-Bildobjekt-Datenraums im Maßstab und Transformation in ein Koordinatensystem: Durch die Methode der Bündelausgleichung und die Verdichtung der Zwischenpunkte mit digitalen Korrelationsmethoden wird ein maßstabsgetreues 3D-Bildobjekt-Datenraum-Modell erzeugt. Das zugrundeliegende Koordinatensystem für dieses Modell kann in Ursprung und Orientierung willkürlich festgelegt werden. Ein sinnvoller Bezugspunkt für das genutzte Koordinatensystem ist beispielsweise eine sogenannte Basislinie, die als Verbindungslinie zwischen den beiden Schulterdrehpunkten des Nutzers definiert wird. Der Ursprung des Koordinatensystems wird in diesem Fall vorzugsweise auf den Mittelpunkt der Schultergelenke gelegt, sodass dieser Punkt als Ursprung (0,0,0) dient. Die Orientierung des Koordinatensystems wird entsprechend auf diese Basislinie abgestimmt.

Über eine Helmert-Transformation mit sechs Parametern kann das Koordinatensystem des 3D-Bildobjekt-Datenraums auf beliebige Raumstrecken und deren Mittelpunkte sowie darauf bezogene Rotationen verzerrungsfrei transformiert werden. Dies bedeutet, dass das Koordinatensystem und die darin enthaltenen 3D-Positionen und -Richtungen in jedes andere gewünschte Koordinatensystem übertragen werden können, ohne dass dabei Maßstabsverzerrungen auftreten. Für die weitere Nutzung ist jedoch nur die maßstabsgetreue Darstellung des 3D-Punktmodells relevant und nicht das zugrunde liegende Koordinatensystem.

Ermittlung des 3D-Zeigemittel-Vektors im 3D-Bildobjekt-Datenraum: Für die Auswahl eines Objekts wird ein 3D-Vektor benötigt, der die räumliche Richtung des Zeigemittels, hier des ausgestreckten Arms des Nutzers, beschreibt. Dieser 3D-Zeigemittel-Vektor besteht aus einer Anfangskoordinate und einer Raumrichtung im 3D-Koordinatensystem. Die Anfangskoordinate kann als der Drehpunkt des Schultergelenks definiert werden. Die Endkoordinate des Zeigemittels, die am ausgestreckten Arm liegt, kann jedoch nicht direkt gemessen werden, da am Ende des Arms keine Positionsbestimmungseinrichtung vorhanden ist, wie sie in der minimalen Systemkonfiguration beschrieben wurde.

Stattdessen wird der 3D-Zeigemittel-Vektor durch Messungen im Kamerabild und mithilfe der wahren Länge des Arms ermittelt. Wenn dieser Vektor erfolgreich berechnet und in das Koordinatensystem des 3D-Bildobjekt-Datenraums transformiert wird, kann er im Modell eindeutig auf eines der Objekte zeigen, womit die Objektauswahl gewährleistet wäre.

Objektauswahl im zuletzt aufgenommenen Bild: Die Auswahl eines Objekts erfolgt durch das Zeigen mit dem Arm im zuletzt aufgenommenen Bild der Orientierungssequenz der Bündelausgleichung. Das letzte Bild dieser Sequenz wird zur Objektauswahl im 3D-Bildobjekt-Datenraum genutzt. Der 3D-Zeigemittel-Vektor wird dabei im Koordinatensystem des maßstabsgetreuen 3D-Modells erzeugt, und der Durchstoßpunkt des Vektors im Modell zeigt auf ein Objekt im Datenraum.

Transformation des 3D-Koordinatensystems: Für die präzise Bestimmung der Zeigegeste im 3D-Bildobjekt-Datenraum wird davon ausgegangen, dass das Koordinatensystem des Modells so festgelegt ist, dass es die Position und Ausrichtung des AI-Pins sowie die Anbringung auf der Person korrekt abbildet. Die Helmert-Transformation erlaubt es, das 3D-Modell und alle darin enthaltenen Objekte in Übereinstimmung mit der Position des zuletzt aufgenommenen Bilds zu bringen, sodass alle relevanten Koordinaten eindeutig und ohne Verzerrung aufeinander abgestimmt sind.

Annahme zur Position und Orientierung der Kamera im 3D-Bildobjekt-Datenraum: Zur Ermittlung des 3D-Zeigemittel-Vektors im 3D-Bildobjekt-Datenraum wird ein Koordinatensystem definiert, das auf dem bekannten Abstand a zwischen den beiden Schulterdrehpunkten des Nutzers basiert. Dieser Abstand a kann entweder gemessen oder als Standardwert verwendet werden. Die Position des Drehpunkts des Zeigerarms wird im maßstabsgetreuen 3D-Bildobjekt-Datenraum festgelegt, wobei das Koordinatensystem durch verzerrungsfreie Translationen und Drehungen wie folgt ausgerichtet wird:

- Der Ursprung des Koordinatensystems befindet sich in der Mitte der beiden Schulterdrehpunkte des Nutzers.

- Die X-Achse verläuft entlang der Verbindungslinie zwischen den Schulterdrehpunkten, mit positiver Richtung zur rechten Schulter.

- Die Aufnahmerichtung der Kamera entspricht der positiven Y-Achse, die vertikal zur X-Achse orientiert ist.

- Die Z-Achse verläuft senkrecht zur X- und Y-Achse und zeigt positiv nach oben.

Die genaue Position und Ausrichtung der Kamera - genauer gesagt die Position des Projektionszentrums der Kamera und die Orientierung ihrer Aufnahmerichtung - relativ zur Person und den Schulterdrehpunkten ist in diesem 3D-Koordinatensystem festgelegt. So wird sichergestellt, dass die Bildaufnahme des Zeigerarms konsistent auf dieses 3D-Koordinatensystem bezogen werden kann.

Im Idealfall wird die Kamera mittig auf der Verbindungslinie zwischen den beiden Schulterdrehpunkten positioniert. Sollte diese Position nicht exakt eingehalten werden, sind die Abweichungen entlang der drei Achsen des 3D-Koordinatensystems dem Prozessor bekanntzugeben. Beispielsweise könnte eine translatorische Verschiebung von 8 cm zur linken Schulter und 12 cm entlang der Y-Richtung vorliegen. In der Y-Richtung ist es erforderlich, diesen Abstand zu bestimmen; alternativ kann ein Standardwert von etwa 4-10 cm angenommen werden, falls eine genaue Messung nicht vorliegt.

Die bevorzugte Ausrichtung der Aufnahmerichtung der Kamera liegt entlang der positiven Y-Achse des 3D-Koordinatensystems, da dies den idealen Aufnahmebereich ergibt. Relevante Abweichungen von dieser Richtung müssen dem Prozessor als Rotationsparameter übermittelt werden. Die Bildebene der Kamera besitzt ein 2D-Koordinatensystem, das zur Erfassung von Bildkoordinaten dient. Eine dieser Bildkoordinatenachsen ist horizontal zur realen Horizontlinie ausgerichtet, da dies die optimalste Orientierung der Bildebene für die Aufnahmen darstellt. Diese Vorgaben können durch eine geeignete Anbringung der Kamera und eine feste Definition der Bildebene vorab realisiert werden.

Berücksichtigung und Transformation von Abweichungen: In der mathematisch einfachsten Position und Orientierung der Kamera können mögliche Abweichungen (maximal fünf Parameter) für die Transformation verzerrungsfrei berücksichtigt werden. Diese umfassen:

- drei Translationen, die die Position des Projektionszentrums der 2D-Bildebene im 3D-Koordinatensystem definieren,

- die Parallelität der X-Achsen,

- die Parallelität der Y-Achsen.

Diese Transformationen ermöglichen es, die gemessenen 2D-Koordinaten der Kamera als transformierte 3D-Koordinaten im 3D-Koordinatensystem zu interpretieren. Da die Koordinatensysteme auf orthogonalen Achsen basieren und die dritte Koordinatenachse (Z-Achse) durch das Kreuzprodukt der X- und Y-Achsen definiert ist, ergibt sich die dritte Rotation implizit. Somit wird eine eindeutige Transformation durch maximal sechs Parameter beschrieben: drei Translationen und drei Rotationen.

Da die Kamera idealerweise mittig zwischen den Schultern angebracht ist, wird in der Regel nur die Translation entlang der Y-Achse - also in Aufnahmerichtung - relevant sein. Meist genügt es daher, nur diesen Parameter zu erfassen, während die anderen Parameter durch die geeignete Anbringung des AI-Pins und der Kamera auf nahezu null reduziert werden können. Sollte jedoch eine Rotation der Bildebene um die Aufnahmerichtung vorliegen, kann der Prozessor diese anhand von Bildinhalten wie Horizontlinien oder anderen horizontalen Linien erkennen, die nicht parallel zur Bildbegrenzung verlaufen. Der Prozessor kann dann den Rotationswinkel automatisch erfassen und bei den folgenden Transformationen als Parameter berücksichtigen.

Größere Einflüsse könnten sich durch asymmetrische Bewegungen der Schultern ergeben, wenn die Kamera diese Bewegungen nicht gleichermaßen ausführt. Solche Bewegungen, wie einseitige Anhebungen oder Absenkungen der Schultern, sind jedoch im Allgemeinen selten und stellen in der Regel keine relevanten Störfaktoren für die Objektauswahl dar.

Ausgehend von dem beschriebenen, mathematisch einfachsten X-Y-Z-Koordinatensystem hat der Drehpunkt des Armzeigers (z. B. des rechten Arms) im letzten Kamerabild die Koordinaten $(a/2,0,0)$. Für die exakte Bestimmung der Richtung des 3D-Zeigemittel-Vektors ist jedoch eine weitere 3D-Koordinate erforderlich, um eine eindeutige Raumrichtung des Zeigervektors im 3D-Koordinatensystem zu erhalten.

Das Kamerabild liefert eine Projektion des Armzeigers in der 2D-Bildebene, jedoch ohne eine eindeutige Richtung im 3D-Raum. Die im Bild dargestellte Spur des Armzeigers repräsentiert eine 3D-Ebene im Raum, die den Armzeiger als Mittellinie enthält und im Bild als Linie abgebildet wird. Diese Ebene enthält theoretisch unendlich viele mögliche Geraden, die sich alle als identische Spur im 2D-Bild darstellen. Im 3D-Raum beschreibt die Ebene daher ebenfalls eine Schnittlinie durch das 3D-Modell. Für ein einfaches Modell, wie eine Wand, ergibt sich eine Durchstoßlinie durch die Wand mit unendlich vielen möglichen Punkten, da jede Zeigerlinie (Mittellinie des Arms) in der Ebene denselben Anfangspunkt im rechten Schultergelenk hat und im Bild die gleiche Spur hinterlässt.

Um eine eindeutige Zeigerlinie und damit die 3D-Richtung des Armzeigers im Raum zu ermitteln, ist es notwendig, die tatsächliche Länge des Armzeigers - hier vorzugsweise die Unterarmlänge oder die Länge eines Zeigerstocks - zu kennen und diese in Relation zur Länge im Bild zu setzen. Die Kenntnis dieser Länge liefert eine mathematisch hinreichende Zusatzinformation, die zur eindeutigen Bestimmung der Zeigerlinie in der Ebene und damit zur Raumrichtung des 3D-Zeigemittel-Vektors im 3D-Bildobjekt-Datenraum erforderlich ist.

Jeder Bildpunkt, der die Spitze des Armzeigers darstellt, ergibt eine eindeutige Richtung im 3D-Objektraum. Für jede Position der Armspitze im Bild kann ein Quotient gebildet werden, der die bekannte Länge des Armzeigers bis zur Spitze ins Verhältnis zur projizierten Länge im Bild setzt. Der Quotient allein ist jedoch kein hinreichendes Kriterium, da er in verschiedenen Bildpunkten identische Werte annehmen kann. Er stellt jedoch ein notwendiges Kriterium dar. Als zusätzliches notwendiges Kriterium zur Eindeutigkeit dient die 2D-Richtung der Spur im Bild, auf der sich der Armzeiger befindet. Diese Richtung kann entweder durch die Erkennung der Spur im Bild oder durch Transformation des Schultergelenks in die Bildebene ermittelt werden. Das transformierte Schultergelenk ist dabei der Schnittpunkt aller möglichen Armspuren im Bild.

Durch die Kombination aus Spur im Bild und Quotient, der über die Lage der Spitze im Bild bestimmt wird, kann der 3D-Raumvektor eindeutig im 3D-Koordinatensystem festgelegt werden. Die exakte Bestimmung ergibt sich aus der Tatsache, dass die Schulterdrehpunkte relativ zur Kamera eine bevorzugte Lage aufweisen und, sofern die Spitze des Armzeigers im Bild sichtbar ist, die Quotienten bei verschiedenen Positionen der Spitze jeweils eindeutige Richtungen im 3D-Raum bestimmen.

Berücksichtigung der Armzeigerlänge im Bild: Für die exakte Bestimmung der Zeigerrichtung ist zu beachten, dass die gesamte Armzeigerlänge im Bild abgebildet werden muss, unabhängig von der Position der Armspitze. Die Armzeigerlänge im 3D-Raum darf daher nicht am Schultergelenk beginnen, sondern sollte eher am Ellbogengelenk ansetzen, da nur so kompatible Messungen zwischen der Länge im 3D-Raum und der Bildprojektion vorgenommen werden können. Werden unterschiedliche Startpunkte verwendet, resultiert ein fehlerhafter Quotient, da die Berechnung auf ungleichen Messgrößen basiert.

Für die eindeutige Bestimmung des 3D-Zeigemittel-Vektors im 3D-Koordinatensystem sind daher folgende zwei Parameter hinreichend:

1. Die Armzeigerlänge, wie sie im Bild projiziert wird, zur Berechnung des Quotienten.

2. Die Richtung der Spur des Armzeigers im Bild, um die 3D-Ebene festzulegen.

Die Messung dieser Parameter - Länge und Richtung des Armzeigers im 2D-Bild - erfolgt durch digitale Bildverarbeitung der Pixel im Bild. Da alle notwendigen Transformationsparameter bekannt sind, kann der 3D-Zeigemittel-Vektor exakt im 3D-Bildobjekt-Datenraum erzeugt und zur Bestimmung der Position im Raum genutzt werden.

Ermittlung und Struktur des 3D-Zeigemittel-Vektors im 3D-Bildobjekt-Datenraum: Die Bestimmung des 3D-Zeigemittel-Vektors erfolgt durch digitale Bildverarbeitung der Bildpixel. Da alle Transformationsparameter (siehe oben) zur Berechnung bekannt sind, kann der 3D-Zeigemittel-Vektor im 3D-Bildobjekt-Datenraum präzise bestimmt werden. Dieser 3D-Zeigemittel-Vektor ergibt sich aus den folgenden Elementen:

- 2D-Bildpunkt der Armspitze: Ein eindeutiger 2D-Bildpunkt wird durch die Lage der Armspitze im Kamerabild bestimmt. Diese Spitze kann durch eine spezielle Markierung gekennzeichnet sein, die dem Kameraauswertesystem bekannt ist und eine zuverlässige Erkennung sicherstellt.

- 2D-Bildpunkt entlang der Verbindungslinie zwischen Armspitze und Schulterdrehgelenk: Ein weiterer gemessener 2D-Bildpunkt wird entlang der Verbindungslinie zwischen der Armspitze und dem Drehgelenk der Schulter ermittelt. Dieser Punkt ist immer abbildbar, sofern die Armspitze im Bild sichtbar ist und der Armzeiger auf einen Objektpunkt im 3D-Bildobjekt-Datenraum zeigt. Auch dieser Punkt kann mit einer bekannten Markierung versehen sein, um die Erkennung durch das Kameraauswertesystem zu unterstützen.

- Definierter statischer Anfangspunkt des Zeigearms im X-Y-Z-Koordinatensystem: Der Anfangspunkt des Armzeigers wird als Drehgelenkpunkt des ausgewählten Arms im X-Y-Z-Koordinatensystem definiert und kann rechnerisch in die Bildebene des Kamerabildes projiziert werden. Dieser rechnerische Punkt definiert den Schnittpunkt aller möglichen Spuren des Armzeigers im Bild. In der Regel wird dieser Punkt jedoch optisch nicht in die Bildebene fallen, da die Kamera gewöhnlich keinen ausreichend großen Öffnungswinkel besitzt.

- Wahre Länge des Armzeigers: Die tatsächliche Länge des Zeigearms wird durch die Messung der oben genannten beiden 2D-Bildpunkte bestimmt, was eine präzise Skalierung des Zeigemittel-Vektors ermöglicht.

- Transformationsparameter und Ausrichtung der Kamera: Die oben beschriebenen Transformationsparameter sowie die Lage und Ausrichtung der Kamera (z. B. Position des Projektionszentrums bei a/2 und Ausrichtung in Y-Richtung) sind bekannt und ermöglichen die exakte Übertragung der Bildkoordinaten in das 3D-Koordinatensystem.

Auswirkung fehlerhafter Parameter: Bei der Objektauswahl ist die Auswirkung kleiner Abweichungen in den Transformationsparametern, etwa durch eine leichte Verschiebung oder abweichende Ausrichtung der Kamera, in der Regel vernachlässigbar. Da die auszuwählenden Objekte typischerweise im Nahbereich der Kamera (d. h. <20 m) liegen und eine ausreichende Größe besitzen, beeinflussen geringe Zeigefehler des Nutzers und/oder Abweichungen in den Vorgaben der Transformationsparameter die Bestimmung des Zielobjekts nur unwesentlich.

Mögliches Verfahren zur Identifizierung von Objekten im 3D-Bildobjekt-Datenraum: Nachfolgend wird ein Verfahren beschrieben, das auf den zuvor erläuterten Berechnungen basiert und eine präzise Objekterkennung im 3D-Bildobjekt-Datenraum ermöglicht.

1. Kalibrierung der Kamera

- Der Nutzer wird aufgefordert, den AI-Pin mit der integrierten Kamera korrekt in der Körpermitte anzubringen, vorzugsweise auf der Verbindungslinie der Schulterdrehpunkte.

2. Kalibrierung der Kamera und des Zeigearms

- Der Nutzer vermisst die Längen seines Zeigearms und relevanter Segmente, wie die Länge des Zeigefingers, die Länge vom Zeigefinger bis zum Handgelenk, vom Zeigefinger bis zum Ellbogen und vom Zeigefinger bis zur Schulter.

- (Optional) Der Nutzer bringt Markierungen auf dem Arm an: Markierungen an den in Schritt 2a genannten Stellen. Zusätzliche Markierungen in regelmäßigen Abständen (z. B. alle 10 cm).

- Der Nutzer richtet den Zeigearm in eine vorgegebene 3D-Richtung zur Kamera aus. Das Gerät speichert die aufgenommenen Bilddaten und kalibriert die Kamera unter Berücksichtigung der festgelegten Armlängen und Dimensionen.

- (Optional) Der Nutzer wird gebeten, den Arm in weiteren vorgegebenen Positionen zu halten, um die Kalibrierung zu verbessern. Die dabei aufgenommenen Daten werden zur Verfeinerung des Selektionsmechanismus gespeichert.

- (Alternative Methode): Der Nutzer positioniert den Arm horizontal in mehreren festgelegten Richtungen, z. B.

10:30, 12:00 und 13:00 Uhr. Für eine höhere Genauigkeit können bei der 12-Uhr-Position zusätzlich vertikale Winkel variiert werden.

3. Identifizierung von Gegenständen

- Der Nutzer richtet den Zeigearm auf einen gewünschten Gegenstand und startet die Identifizierung, beispielsweise durch eine Spracheingabe wie "Was ist der Gegenstand vor mir?".

- Das Gerät bestimmt mithilfe der oben beschriebenen Mechanismen die genaue Richtung, in die der Nutzer zeigt (Schritt 3b).

- Das Gerät identifiziert das angezeigte Objekt und gibt eine Rückmeldung an den Nutzer, um die Auswahl zu verifizieren (z. B. "Meinen Sie Objekt [...]?"). Das Bild aus der Kamera des AI-Pins wird verwendet, um anhand des errechneten Winkels des Zeigearms das Objekt im Bild zu bestimmen. Zur Objekterkennung können bekannte Algorithmen verwendet werden (z. B. "Google Circle to Search").

- Der Nutzer bestätigt die Auswahl des Objekts oder korrigiert die Auswahl, indem er zusätzliche Informationen bereitstellt, um die Selektion zu präzisieren (z. B. durch Spracheingabe "weiter links"). Der Prozess kehrt anschließend zu Schritt 3b zurück.

- Nach erfolgreicher Identifikation des Objekts nutzt das Gerät die Korrektureingaben des Nutzers, um die Kalibrierung weiter zu optimieren.

Kalibrierung ohne festgelegtes Objektfeld: Falls kein vorbereiteter Raum oder eine spezielle Kalibrierungswand zur Verfügung stehen, kann das folgende alternative Kalibrierungsverfahren über den AI-Pin initiiert werden:

1. Start der Kalibrierung: Der AI-Pin identifiziert ein beliebiges Objekt im Raum, das als Referenzobjekt genutzt wird.

2. Ausrichtung des Nutzers: Der AI-Pin fordert den Nutzer auf, den Oberkörper in Richtung eines Referenzobjekts (Objekt X) auszurichten.

3. Zeigergeste zur Referenz: Der Nutzer wird aufgefordert, den Zeigearm für eine bestimmte Dauer auf ein markantes Element (z. B. Element Y) des Objekts X zu richten, während die Oberkörperausrichtung unverändert bleibt. Falls der AI-Pin über einen Laserpointer verfügt, wird dieser auf dasselbe Element Y gerichtet.

4. Wiederholung mit weiteren Elementen: Der Nutzer wiederholt Schritt 3 mit anderen Elementen (Y(i)) auf demselben Objekt X und weiteren Objekten (X(i)), wobei jeweils der Horizontalwinkel geändert wird, während die Oberkörperorientierung konstant bleibt.

Der AI-Pin berechnet anschließend die Kalibrierungsparameter und bewertet die Genauigkeit. Falls die erreichte Genauigkeit nicht den vorgegebenen Grenzwerten entspricht, werden weitere Zielvorgaben für den Zeigearm initiiert, um die Anforderungen zu erfüllen.

Erstellung eines 3D-Objektfeldes für die Kalibrierung: Jeder Raum oder jede Wand mit eindeutigen optischen Merkmalen kann als Objektfeld oder Testwand für die Kalibrierung genutzt werden, ohne dass das Objektfeld zuvor vermessen werden muss. Die notwendige Einmessung erfolgt sukzessive durch den AI-Pin im Verlauf der Kalibrierung mithilfe von Richtungs- und, wenn verfügbar, Entfernungsbestimmungen. Diese Entfernungsmessungen könnten auch eine separate Erfindungsmeldung umfassen.

Ein vollständiges 3D-Objektfeld wird über die sukzessive Anwendung der relativen Orientierung und der Bündelausgleichung der aufgenommenen Bilder erzeugt. So lassen sich die 3D-Positionen und Entfernungen der Objekte relativ zum AI-Pin zuverlässig bestimmen.

Mögliche Abwandlungen:
Einige Endgeräte bzw. AI-Pins verfügen über die Möglichkeit, Bilder zu projizieren oder Laserstrahlen zu erzeugen. Durch die beschriebenen Berechnungsmethoden kann ein Richtungsvektor verwendet werden, um einen sichtbaren Punkt (z. B. mithilfe eines Lasers) auf ein Zielobjekt zu projizieren.

Dies ermöglicht dem Nutzer eine direkte Sichtprüfung seiner Selektion durch den Zeigearm und bietet auch eine visuelle Rückmeldung, um die korrekte Ausrichtung des Zeigearms zu verifizieren. Diese Funktion unterstützt sowohl die Prüfung des Kalibrierungsverfahrens als auch eine visuelle Darstellung der Zeigegeste gegenüber anderen Personen. Zusätzlich könnte das erfasste Objekt in reduzierter Auflösung auf die Handfläche des Nutzers projiziert werden, wobei der Durchstoßpunkt des 3D-Zeigemittel-Vektors hervorgehoben wird.

Die Auswahl eines Objekts erfolgt durch digitale Bildverarbeitung, bei der spezifische Interest-Operatoren verwendet werden, um geometrische Strukturen wie Linien oder Kurven und deren Muster im Bildraum zu identifizieren. Die Auswahl durch den AI-Pin beschränkt sich zunächst auf einen kleinen Bildbereich um den Auftreffpunkt des 3D-Zeigemittel-Vektors im Objektraum. Sollte in diesem Bereich kein Objekt erkannt werden, wird die Analyse schrittweise auf benachbarte Bildbereiche erweitert. Alternativ, insbesondere wenn kein bekanntes Objektmuster identifiziert wird, kann der Bereich um den Auftreffpunkt des Zeigerarms als detektiertes "Objekt" ausgegeben werden.

Der Zeigerarm kann entweder der rechte oder der linke Arm des Nutzers sein. Bei idealer Anbringung des AI-Pins ändert sich für den linken Arm lediglich die X-Koordinate des Drehpunkts, die als -a/2 für die linke Schulter zu berechnen ist.

Alternativ kann der AI-Pin an einer anderen Position am Körper des Nutzers angebracht sein, jedoch ist in diesem Fall eine zusätzliche Angabe der translatorischen Verschiebung relativ zu den beiden Schultergelenken erforderlich. Um eine verzerrungsfreie Darstellung sicherzustellen, sollte die Aufnahmerichtung der Kamera dabei unverändert beibehalten werden, um zu vermeiden, dass der Nutzer eine abweichende Darstellung der aufgenommenen Objekte erhält.

Eine zusätzliche Kalibrierung wird empfohlen, um die korrekte Positionierung des AI-Pins zu überprüfen. Der Nutzer sollte sich vor einer markanten Objektlandschaft bewegen und dabei stets zur Mitte der Objektlandschaft ausgerichtet bleiben. Nachdem er in dieser Position zum Stillstand gekommen ist, streckt er den Zeigerarm parallel zur Aufnahmerichtung der Kamera aus (Ausgangsposition). Anschließend bewegt der Nutzer den Arm vertikal (von ganz oben bis ganz unten) senkrecht zur X-Achse (Schulterlinie) und kehrt dann in die Ausgangsposition zurück. Danach führt er horizontale Bewegungen (von ganz links bis ganz rechts) aus. Das System misst die Armspur und die entsprechende Zeigerarmlänge im Bild und berechnet die dazugehörigen 3D-Richtungen sowie den Bildausschnitt dieser Richtungen. Auch kombinierte Richtungsänderungen in der Horizontal- und Vertikalebene sind möglich, um die Kalibrierung weiter zu verfeinern.

Zur Praktikabilität des Verfahrens gehört auch, dass der AI-Pin automatisch entscheidet, wann eine erneute Bündelausgleichung durch eine neue Bildaufnahme erforderlich ist. Diese Entscheidung kann auf der Grundlage von Translationen, die durch den 3-Achs-Sensor erfasst wurden, und Änderungen in der Kamerarichtung getroffen werden. Der Start der Bündelausgleichung könnte zudem durch Gesten oder durch Tippen auf den AI-Pin initiiert werden.

Die Anbringung von Messmarken am Arm des Nutzers sowie deren Erkennung durch die Kamera trägt zur Genauigkeitssteigerung des Verfahrens bei, insbesondere wenn die realen Abstände der Markierungen vorab bekannt sind. Der 3-Achs-Sensor zur Bestimmung der Translation des Projektionszentrums der Kamera stellt eine wertvolle Unterstützung dar, um Relative Orientierungen zwischen zwei Bildern effizient zu berechnen. Falls die Prozessorleistung ausreichend ist, kann die Relative Orientierung und die abschließende Bündelausgleichung jedoch auch ohne den 3-Achs-Sensor durchgeführt werden, indem höhere Rechenleistung durch mehrere Iterationen genutzt wird.

Ohne die Translationsmessungen des 3-Achs-Sensors verfügt das digitale 3D-Modell allerdings über keine Maßstabsinformation durch diese Streckenbeobachtungen. Der Maßstab des Modells müsste dann durch die willkürliche Festlegung einer der Basislinien definiert werden, was zu einer geringfügigen Maßstabsabweichung führen kann. Die verbleibenden Maßstabsinformationen umfassen die bekannte Brennweite $fff$ der Kamera sowie die Translationsvektoren zwischen dem Kamerakoordinatensystem und dem personengebundenen Koordinatensystem. Zusätzlich kann die Messung der Entfernung des Panels zum Handgelenkspunkt $PPP$ zur Maßstabsbestimmung herangezogen werden. Sollte die Kamera ein Objekt bekannter Länge im Objektraum erkennen, kann diese Längeninformation ebenfalls zur Maßstabsbestimmung verwendet werden.

Variante 2:

Bei der Umsetzung Lösung gemäß Variante 2 wird davon ausgegangen, dass drei Koordinatensysteme definiert sind, die sich allein durch Translationen, also Verschiebungen in drei senkrechte Richtungen, ineinander überführen lassen. Diese Koordinatensysteme sind so ausgerichtet, dass ihre X-, Y- und Z-Achsen parallel zueinander verlaufen und denselben Maßstab aufweisen. Die Achsenorientierung ist wie folgt festgelegt:

- Die Z-Achse verläuft vertikal in Lotrichtung mit positiver Richtung zum Zenit.

- Die Y-Achse ist durch die Aufnahmerichtung der Kamera in Richtung des 3D-Bildobjekt-Datenraums definiert.

- Die X-Achse steht senkrecht auf der Z- und der Y-Achse, was durch das mathematische Kreuzprodukt $X \times Y$ gegeben ist.

Die drei Koordinatensysteme sind wie folgt beschrieben:

- Kamera-gebundenes Koordinatensystem ($S_k$): Dieses Koordinatensystem ist an die Kamera des AI-Pins gebunden. Die Y-Achse ist horizontal und verläuft in Aufnahmerichtung, während die X-Achse horizontal und parallel zur Verbindungslinie zwischen den beiden Schultergelenken des Nutzers verläuft. Der Ursprung des kamera-gebundenen Koordinatensystems liegt im Projektionszentrum der Kamera.

- Personen-gebundenes Koordinatensystem ($S_s$): Das personen-gebundene Koordinatensystem ist relativ zur Person und definiert die X-Achse durch die Verbindungslinie zwischen den beiden Schultergelenken des Nutzers, wobei die positive X-Richtung von der linken zur rechten Schulter verläuft. Die Y- und Z-Achsen sind parallel zu den korrespondierenden Achsen des kamera-gebundenen Koordinatensystems. Der Ursprung dieses Systems (0,0,0) liegt in der Mitte der Verbindungslinie zwischen den beiden Schultergelenkdrehpunkten.

- AoA-Panel-gebundenes Koordinatensystem ($S_p$): Dieses Koordinatensystem ist an das Angle-of-Arrival (AoA)-Panel gebunden. Der Ursprung liegt in der Mitte des Panels, an dem Punkt, der als Ausgangspunkt für die Berechnung der Raumrichtung dient.

Die Koordinatensysteme $S_k$ und $S_p$ lassen sich mithilfe der bekannten Translationsvektoren $T_k$ und $T_s$ ineinander überführen. Die Transformationen sind wie folgt definiert:

$$S_k = S_s + T_k$$

$$S_p = S_s + T_p$$

Die Parallelität der Achsen wird durch die Ausrichtung der Kamera und des AoA-Panels am AI-Pin erreicht. Die Werte der Translationsvektoren $T_k$ und $T_s$ sind abhängig von der spezifischen Positionierung der Kamera und des Panels am Körper des Nutzers. Die X-Komponenten dieser Vektoren können beispielsweise auf Null gesetzt werden, während die Y- und Z-Komponenten durch Messungen oder geeignete Schätzungen ermittelt und dem Prozessor mitgeteilt werden müssen.

Falls die Kamera und das AoA-Panel starr miteinander verbunden sind, vereinfacht sich die Bestimmung der Z-Komponenten. Wenn das Projektionszentrum der Kamera beispielsweise auf X=0 und Z=0 festgelegt wird und das AoA-Panel bei festen Werten wie X=0 und Z=-5 cm angebracht ist, muss lediglich der gemeinsame Y-Wert bestimmt und dem Prozessor übermittelt werden (oder als Standardwert im Setup z. B. auf +8 cm festgelegt werden).

Um die Bildkoordinatenmessungen der Kamera in 3D-Richtungen im Raum umzuwandeln, ist es erforderlich, die Brennweite der Kamera sowie die Hauptpunktlage, als Symmetriepunkt für eine hinreichend bekannte radialsymmetrische Objektivverzeichnung, genau zu kennen. Die Kamera ist bevorzugt mit einem Weitwinkelobjektiv ausgestattet, um ein breites Sichtfeld zu ermöglichen.

Diese technischen Voraussetzungen erlauben die Berechnung der 3D-Richtungen $r_k$ der Kamera, die für die Erzeugung eines digitalen 3D-Bildobjekt-Datenraums essenziell sind. Zur Unterstützung dieser 3D-Bildobjekt-Datenraum-Bestimmung kann ein optionaler 3-Achs-Sensor eingesetzt werden. Dieser Sensor liefert kontinuierlich Informationen über die translatorischen Bewegungen der Kamera entlang der drei Achsen (x, y und z) eines kartesischen Koordinatensystems. In diesem System entspricht die z-Achse der Lotrichtung, während die x-y-Ebene senkrecht zur z-Achse steht. Obwohl die Orientierung der x- und y-Achsen variabel ist, ist es rechentechnisch vorteilhaft, eine der beiden Achsen in Aufnahmerichtung der Kamera auszurichten. Der 3-Achs-Sensor muss starr mit der Kamera verbunden sein, um korrekte Bewegungsinformationen zu gewährleisten.

Zusätzlich zum beschriebenen Mindestaufbau kann der AI-Pin optionale Ausgabemöglichkeiten umfassen, um das ausgewählte Objekt einer Person oder anderen Nutzern akustisch oder über drahtlose Kommunikationsmittel mitzuteilen. Dazu gehören beispielsweise optische Projektionen, Lautsprecher oder eine Kommunikationsschnittstelle. Diese Ausgabemöglichkeiten dienen jedoch ausschließlich der Benutzerinteraktion und tragen nicht zur Auswahl oder Bestimmung des analysierten Objekts bei. Die Funktionalität einer optionalen Künstlichen Intelligenz ist ebenfalls nicht erforderlich, kann jedoch nützlich sein, um die Objekterkennung zu erweitern. In Abwesenheit einer KI kann der AI-Pin als "Kamera-Prozessor-Pin" konfiguriert werden, der deterministische Entscheidungen trifft.

Das zentrale Problem bei minimalen Systemkonfigurationen bestand bisher darin, dass der Objektraum anhand von lediglich 2D-Bildern der Kamera nicht als 3D-Modell erstellt werden konnte. Zudem lieferte der Zeigerarm keine eindeutige 3D-Richtung im Objektraum, die der Kamera zur präzisen Objektbestimmung übergeben werden konnte. Der Zeigerarm kann zwar in einem beliebigen Koordinatensystem als 3D-Vektor interpretiert werden, jedoch ist diese räumliche Richtung in der 2D-Bildebene der Kamera nur als 2D-Richtung abbildbar.

Es wird eine geometrisch-algebraische Methode zur eindeutigen Bestimmung der Objektposition im 3D-Bildobjekt-Datenraum vorgeschlagen. Diese Methode ist mit der oben beschriebenen minimalen Systemkonfiguration durchführbar, sofern die erforderliche Rechenleistung gewährleistet ist. Es wird angenommen, dass der AI-Pin, wie unter https://hu.ma.ne/ beschrieben, über erweiterte Funktionen wie AI-, Kommunikations-, Sprach- und Projektionsfähigkeiten verfügt und damit eine höhere Prozessorleistung aufweist als für die im Folgenden beschriebenen Verarbeitungsschritte erforderlich. Alternativ kann die Verarbeitung über eine drahtlose Kommunikationsschnittstelle an ein externes Gerät, etwa ein Smartphone oder eine Smartwatch, ausgelagert werden. Die Ergebnisse werden dann entweder an den AI-Pin zurückgesendet oder direkt auf dem externen Gerät ausgegeben.

Lösungsbeschreibung und Systemaufbau Für das Verfahren wird davon ausgegangen, dass der AI-Pin oder eine reduzierte Kamera-Prozessor-Einheit statisch an der Vorderseite des Nutzers angebracht ist und dass die Koordinatensysteme entsprechend definiert sind. Der AI-Pin ist mittig und auf Höhe der Drehpunkte der Schultergelenke angebracht, wobei die Aufnahmerichtung der Kamera horizontal und senkrecht zur Verbindungslinie der beiden Schulterdrehpunkte nach vorne zeigt. Die Bildebene der Kamera ist ebenfalls horizontal ausgerichtet. Falls die Kamera von dieser idealen Position abweicht, müssen relevante Abweichungen in Translation und Rotation dem Auswertesystem zur Kompensation bekanntgegeben werden. Am Handgelenk des Zeigerarm ist ein Funksignal-Sender angebracht.

Das Angle-of-Arrival (AoA)-Panel und der 3-Achs-Sensor sind starr zur Kamera im Brustbereich des Nutzers angebracht, um eine stabile Koordinatentransformation zu gewährleisten. Zur Erkennung der Zeigegeste trägt der Nutzer einen Funksignal-Sender am Handgelenk des Zeigerarms.

Es wird angenommen, dass der Nutzer auf Objekte im Sichtfeld der Kamera wahlweise mit dem linken oder rechten ausgestreckten Arm zeigt. Die Kameraauswertung ist in der Lage, zu erkennen, welcher Arm des Nutzers zur Zeigegeste verwendet wird.

Verfahren zur Erzeugung eines 3D-Bildobjekt-Datenraums durch Relative Orientierung und Bündelausgleichung: Für die Durchführung des Verfahrens wird vorausgesetzt, dass zur Erzeugung des 3D-Bildobjekt-Datenraums mehrere 2D-Bilder der Kamera verwendet werden, wobei sich die Kamera bei mindestens zwei dieser Aufnahmen an unterschiedlichen Positionen befinden muss. Diese Verschiebung oder Translation zwischen den Projektionszentren der Kamerabilder wird mithilfe eines 3-Achs-Sensors ermittelt, der die Bewegungen der Kamera des AI-Pins kontinuierlich in den drei kartesischen Komponenten x, y und z aufzeichnet. Ein Zeitgeber synchronisiert dabei die Translationsdaten mit den Aufnahmezeitpunkten, sodass jede Bewegung präzise den einzelnen Bildaufnahmen zugeordnet wird.

Zur Erkennung markanter Punkte im Objektraum werden bekannte Interest-Operatoren verwendet. Diese digitalen Filter identifizieren lokale Bildmuster wie Ecken, Linienkreuzungen oder Farbkontraste und deren 2D-Bildkoordinaten im jeweiligen Bild. Zwei zeitlich benachbarte Bilder, deren Projektionszentren ausreichend weit voneinander entfernt sind - was in Bezug auf die Brennweite der Kamera bekannt ist -, werden durch eine rechnerische Relative Orientierung zueinander ausgerichtet. Die Relative Orientierung ist ein Fachbegriff zur Bestimmung der räumlichen Beziehung zwischen zwei Bildern und wird erreicht, indem die markanten Punkte in beiden Bildern zueinander zugeordnet werden, wobei statistische Ausreißertests und sukzessive Neuzuordnungen zur Präzisierung eingesetzt werden. Das Ergebnis dieses Prozesses ist ein Bildpaar, das relativ zueinander so orientiert ist, dass die Bildstrahlen der zugeordneten Punkte aus den Projektionszentren der Kamera heraus verlängert und unter Berücksichtigung der Objektivverzeichnung in einem markanten Objektpunkt schneiden.

Einige markante Punkte werden möglicherweise nur in einem der beiden Bilder erscheinen, z. B. aufgrund von Verdeckungen oder wenn sich ein Punkt aus dem Aufnahmebereich der Kamera bewegt hat. Dieser Vorgang wird als Relative Orientierung eines Bildpaares bezeichnet und ergibt ein 3D-Bildobjekt-Datenraummodell, das die räumliche Anordnung des Objektraums in den Koordinaten der durch die Bildstrahlen bestimmten Punkte exakt widerspiegelt.

Erzeugung eines maßstabsgetreuen Modells und Bündelausgleichung: Zusätzliche Zwischenpunkte und deren 3D-Koordinaten auf einer Objektoberfläche können durch Korrelationstechniken für die digitalen Bildausschnitte der beiden Bilder berechnet werden. In einigen Fällen kann es durch Verdeckungen zu Lücken in der 3D-Bestimmung kommen. Zunächst ist das 3D-Bildobjekt-Datenraummodell jedoch maßstabsfrei und wird durch die algorithmisch festgelegte Distanz der Projektionszentren skaliert (z. B. 1>0). Durch Verwendung des mit dem 3-Achs-Sensor gemessenen tatsächlichen Abstands a wird das Modell im Maßstab a:1 skaliert, wodurch ein digitales Modell entsteht, das im gleichen Maßstab wie die reale Szene vorliegt.

Die Genauigkeit des 3D-Modells kann durch das Verfahren der Bündelausgleichung sukzessive verbessert werden, indem zusätzliche Bilder von verschiedenen Kamerapositionen ausgewertet werden. Dabei werden die Orientierungen und Positionen der Kameras als zu schätzende Parameter in die Berechnung der 3D-Koordinaten eingeführt. Die Positionsgenauigkeit eines 3D-Punktes verbessert sich dabei tendenziell gemäß der Formel

$$Genauigkeit\_neu = \frac{Genauigkeit\_alt}{\sqrt{n_{neu}/n_{alt}}}.$$

Wenn sich beispielsweise die Anzahl der Bildstrahlen zu einem Punkt um den Faktor 4 erhöht, verbessert sich die Positionsgenauigkeit um den Faktor 2.

Berechnung der 3D-Richtungsvektoren im Kamerakoordinatensystem: Die einzelnen Bildstrahlen werden durch Messung der Bildkoordinaten x' und z' eines digitalen Punktes P(i) sowie der Brennweite f der Kamera definiert. Ein Vektor im kamerabezogenen Koordinatensystem lässt sich somit als $r_k$=(x'(i),f, z'(i)) darstellen. Dieser Vektor kann in jedes andere 3D-Koordinatensystem einer spezifischen Kameraposition transformiert werden, um die räumliche Ausrichtung der Punkte im 3D-Bildobjekt-Datenraum präzise zu bestimmen.

Erzeugung eines maßstabsgetreuen 3D-Bildobjekt-Datenraums und Definition des Koordinatensystems: Durch die Bündelausgleichung und die Verdichtung von Zwischenpunkten mithilfe digitaler Korrelationsmethoden wird ein digitales 3D-Modell des Objektraums im richtigen Maßstab erzeugt. Dabei kann der Ursprung und die Orientierung des Koordinatensystems frei gewählt werden. Für das Verfahren ist es jedoch sinnvoll, ein Koordinatensystem zu verwenden, das sich auf eine Basislinie bezieht, die durch die Raumstrecke zwischen den beiden Schulterdrehpunkten des Nutzers definiert ist. Der Mittelpunkt zwischen den beiden Schultergelenken wird als Ursprung (0,0,0) festgelegt, und die drei Rotationen des Koordinatensystems orientieren sich an dieser Basislinie.

Mittels einer 6-Parameter-Helmert-Transformation lässt sich das Koordinatensystem verzerrungsfrei in beliebige Raumkoordinatensysteme übertragen, sodass sowohl die Positionen als auch die Richtungen der Koordinatenpunkte des 3D-Modells ebenfalls verzerrungsfrei transformiert werden können. Die alleinige Skalierung des 3D-Punktmodells im richtigen Maßstab ist jedoch ausreichend für die Aufgabenstellung, unabhängig davon, in welchem Koordinatensystem das Modell definiert ist.

Definition des 3D-Zeigemittel-Vektors und Berechnung der Position des Funksignal-Senders: Zur Erzeugung des 3D-Zeigemittel-Vektors im gewählten 3D-Koordinatensystem werden eine 3D-Anfangskoordinate und eine 3D-Raumrichtung benötigt, die durch eine 3D-Endkoordinate gegeben sein kann. Würde das Angle-of-Arrival (AoA)-Panel die 3D-Position P des Funksignal-Senders am Handgelenk des Zeigerarms liefern, könnte der 3D-Zeigemittel-Vektor vollständig im personen-gebundenen Koordinatensystem ($S_s$) berechnet werden. Der Armvektor im $S_s$-System ergibt sich durch den Schulterdrehpunkt (0,0,0) als Anfangspunkt und eine Raumrichtung $r_s$ mit im $S_s$-System als $r_s$ =(P in $S_s$)-(0,0,0) berechnet wird.

Da die Koordinatensysteme $S_s$ und $S_p$ keine Rotationen zueinander aufweisen, kann die Position P im System $S_s$ durch eine reine Translation aus dem System $S_p$ ermittelt werden:

$$P \text{ in } S_s = (P \text{ in } S_p) - T_p$$

Hierbei ist P im System $S_p$ die durch das AoA-Panel ermittelte Position des Funksignal-Senders, und $T_p$ ist der anfänglich gegebene Translationsvektor zwischen $S_s$ und $S_p$.

Verfügbarkeit und Präzision geeigneter AoA-Panels: Es sind AoA-Panels verfügbar, die die Position des Funksignal-Senders bestimmen können, sofern das Panel mit mehreren, geeignet angeordneten Sensoren ausgestattet ist. Ein Beispiel ist das Antennenmodul CHW1010-ANT2-1.0, das bei einer X-Z-Dimension von 15 cm $\times$ 15 cm eine Positionsgenauigkeit von 10 cm für den Punkt P liefert, welcher die Position des Funksignal-Senders darstellt. Bei einem ausgestreckten Arm mit einer Länge von etwa 60 cm (Schulter bis Handgelenk) ergibt sich daraus eine Richtungsgenauigkeit von etwa 9 Grad. Diese Genauigkeit liegt im Bereich der durchschnittlichen Armrichtung, die eine Person erreicht, wenn sie mit dem Arm auf ein Objekt zeigt. Die 3D-Richtungsgenauigkeit von 9 Grad beschreibt somit die Präzision, mit der der Armzeiger durch P definiert ist und auf den Objektraum ausgerichtet werden kann.

Verfahren zur Verbesserung der Positionsbestimmung des Funksignal-Senders durch Kombination von Kamera-Bildkoordinatenmessungen und Panelmessungen: Die Genauigkeit der Positionsbestimmung des Funksignal-Senders kann weiter erhöht werden, indem zusätzlich zur Panelmessung auch die Bildkoordinatenmessung der Kamera für den Punkt P genutzt wird. Im kamera-gebundenen Koordinatensystem $S_k$ ist der Punkt P durch die 3D-Raumrichtung $r_k$ gegeben. Diese Richtung $r_k$ kann im Koordinatensystem $S_p$ des Panels mit der Richtung $r_p$, die durch die Panelmessung im System $S_p$ bestimmt wurde, kombiniert werden. Bei idealen Bedingungen ohne Messfehler sollten sich diese beiden 3D-Richtungen (Strahlen) im Raum im gleichen Punkt P schneiden.

Da jedoch in der Praxis Messungenauigkeiten sowohl bei der Bestimmung der Richtungen $r_p$ und $r_k$ als auch bei der Einhaltung der Translation und Rotation von $S_k$ zu $S_p$ auftreten können, verlaufen die beiden 3D-Strahlen typischerweise windschief, also in geringem Abstand voneinander an P vorbei. Der wahrscheinlichste Ort für P liegt daher in der Mitte des kürzesten Abstands zwischen den beiden Strahlen. Dieses Verfahren ist bekannt und kann durch Berücksichtigung angenommener Messfehler in den Strahlen und der zuvor berechneten Position von P optimiert werden, was dem Fachmann der Ausgleichsrechnung geläufig ist. Unter der Annahme einer präzisen Kamera-Bildkoordinatenmessung kann die Positionsgenauigkeit des Punktes P auf diese Weise um etwa den Faktor 1,5 verbessert werden.

Die Genauigkeit der Positionsbestimmung des Punktes P kann ebenfalls durch den Einsatz von Panels mit höherer Präzision oder mehreren starr angebrachten Panels am Körper weiter gesteigert werden. Wird die Richtungsmessung der Kamera zur Optimierung herangezogen, empfiehlt es sich, die Kamera und das Panel möglichst weit voneinander entfernt zu positionieren, um den Schnittwinkel der beiden Raumstrahlen zu vergrößern.

Kombinierte Bestimmung der Richtung $r_p$ und Position P mit Panelmessungen: Das oben beschriebene Verfahren zur Kombination von Panelmessungen und Kamera-Bildkoordinatenmessungen kann auch dann angewendet werden, wenn das Panel lediglich die 3D-Raumrichtung $r_p$ zur Signalquelle im Punkt P bestimmt, ohne dessen Position explizit zu erfassen. In diesem Fall genügt ein Panel, das die Raumrichtung $r_p$ im System $S_p$ zum Punkt P ermittelt. Die Bestimmung der Position von P erfolgt dann über das gleiche Prinzip der windschiefen Geraden.

Erweiterte Genauigkeit ohne direkte Armlängenmessung: Falls erforderlich, kann die Richtungsgenauigkeit des Zeigerarms auch in einer vereinfachten Version der Erfindung ohne direkte Armlängenmessung erreicht werden, indem ausschließlich das AoA-Panel und die Panelmessung zur Bestimmung der Position von P verwendet werden. Auf eine Armlängenmessung durch die Kamera kann in dieser Variante verzichtet werden. Beide Methoden - die Panelmessung und die Nutzung der Bildrichtungsmessung der Kamera - können zudem kombiniert werden, um die Richtungsgenauigkeit des Armzeigers weiter zu erhöhen.

Bestimmung des Zeigepunkts im 3D-Bildobjekt-Datenraum: Durch die Zeigegeste des Nutzers im zuletzt aufgenommenen Bild der Orientierungssequenz der Bündelausgleichung wird das Zielobjekt im 3D-Bildobjekt-Datenraum ausgewählt. Hierfür muss der Armvektor des Nutzers im Koordinatensystem des maßstabsrichtigen digitalen Modells erzeugt werden, sodass der Durchstoßpunkt des Armvektors im Modell eines Objekts bestimmt werden kann. Diese Berechnung ist durchführbar, allerdings komplex, und ist bisher in der Fachliteratur nicht dokumentiert.

Transformation des 3D-Modells in das personen-gebundene Koordinatensystem $S_s$: Es wird angenommen, dass das 3D-Modell des Objektraums einschließlich aller enthaltenen Objekte im Koordinatensystem des zuletzt aufgenommenen Bildes, das mit der Anbringung der Kamera am Körper des Nutzers und damit auch dem personen-gebundenen Koordinatensystem $S_s$ in Einklang steht, vorliegt. Diese Transformation ist verzerrungsfrei durch die Helmert-Transformation realisierbar. Das jeweils aktuelle 3D-Modell des Objektraums kann somit rechnerisch im zuletzt definierten System $S_s$ dargestellt werden. In diesem System liegt ebenfalls der Armzeiger vor, sodass der 3D-Armvektor auf das 3D-Objektmodell zeigt. Dies ermöglicht die Berechnung des Durchstoßpunkts D des Armzeigers im digitalen 3D-Modell.

Im Hinblick auf die Auswirkungen kleiner Abweichungen der Parameter - einschließlich fehlerhafter Anbringung der Kamera - ist festzuhalten, dass die auszuwählenden Objekte in der Regel in relativer Nähe zur Kamera liegen (typischerweise weniger als 20 m entfernt) und eine Mindestgröße aufweisen. Kleinere Zeigefehler des Nutzers oder geringfügige Abweichungen in den Vorgaben, wie beispielsweise die Anbringung der Kamera, haben daher in der Regel keine relevanten Auswirkungen auf die Genauigkeit der Objektauswahl.

1. Kalibrierung der Kamera

- Der Nutzer wird aufgefordert, das Gerät einschließlich der Kamera korrekt in der Körpermitte zu positionieren.

- Der Nutzer befestigt eine Smartwatch oder ein ähnliches Gerät am Handgelenk des Zeigearms.

- (Optional) Der Nutzer begibt sich in einen Bereich mit minimalen elektromagnetischen Feldern (z. B. Keller), um die Messgenauigkeit zu erhöhen.

2. Kalibrierung der Kamera und des Zeigearms

- Der Nutzer vermisst den Zeigearm, wobei die Länge des Zeigefingers, die Distanz vom Zeigefinger zum Handgelenk, vom Zeigefinger zum Ellbogen und vom Zeigefinger zur Schulter ermittelt werden.

- (Optional) Der Nutzer bringt Markierungen auf dem Arm an:

  - Markierungen an den oben genannten Messpunkten.

  - Zusätzliche Markierungen in regelmäßigen Abständen (z. B. alle 10 cm).

  - Abstände zur Smartwatch in regelmäßigen Intervallen.

- Der Nutzer richtet den Zeigearm in einer vorgegebenen 3D-Position in die Kamera, woraufhin das Gerät die Armabmessungen speichert und die Kamera kalibriert. Die AoA-Antennenwerte werden ebenfalls gemessen.

- *(Optional)* Der Nutzer hält den Zeigearm in verschiedenen vorgegebenen Positionen, um die Kalibrierung zu verfeinern:

- Die Smartwatch wird in verschiedenen Positionen vor das Gerät gehalten:

  1. Direkt vor den Körper in festgelegten Abständen (z. B. 20 cm, 40 cm, usw.).

  2. Horizontal in unterschiedlichen Orientierungen, wie z. B. auf 10:30, 12:00 und 13:00 Uhr. Für eine präzisere Kalibrierung können bei der 12:00-Position auch vertikale Winkelvariationen genutzt werden.

  ◦ Das Gerät speichert die aufgenommenen Daten und kalibriert den Selektionsmechanismus mithilfe der erfassten Armdimensionen. Zusätzliche AoA-Antennenwerte werden ebenfalls gemessen.

3. Objekterkennung

  ◦ Der Nutzer richtet den Zeigearm auf einen Gegenstand und startet die Identifikation, z. B. durch eine Spracheingabe wie "Was ist der Gegenstand vor mir?"

  ◦ Das Gerät bzw. die Kamera ermittelt unter Berücksichtigung der AoA-Daten und der genannten Mechanismen die exakte Zeigerrichtung des Nutzers. Schritt 3b.

  ◦ Das Gerät identifiziert das angezeigte Objekt und gibt dem Nutzer zur Bestätigung eine Rückmeldung (z. B. "Meinen Sie Objekt [...]?").

  ◦ Der Nutzer bestätigt die Auswahl oder gibt zusätzliche Anweisungen, um den Selektionsmechanismus zu präzisieren (z. B. durch die Spracheingabe "weiter links"). Der Prozess kehrt in diesem Fall zu Schritt 3b zurück.

  o Nach erfolgreicher Identifikation des Objekts nutzt das Gerät die Korrektureingaben des Nutzers, um die Kalibrierung anzupassen und so die Selektionsgenauigkeit weiter zu optimieren.

Abwandlungen von Variante 2:
Der genannte 3-Achs-Sensor zur Bestimmung der Translation der Kamera (d. h. des Projektionszentrums der Kamera) bietet eine wertvolle Unterstützung, um die Berechnung der relativen Orientierung zwischen zwei Bildern zu beschleunigen. Sofern eine höhere Rechenleistung verfügbar ist, lässt sich die Berechnung der Relativen Orientierung und der abschließenden Bündelausgleichung jedoch auch ohne die Translationsmessungen des 3-Achs-Sensors durchführen.
Ein Verzicht auf den 3-Achs-Sensor hätte zur Folge, dass das digitale 3D-Modell keine maßstabsstützende Information durch die Translationsbeobachtungen erhält. Der Maßstab des Modells müsste in diesem Fall durch eine willkürliche Festlegung einer der Basislinien bestimmt werden, was zu geringfügigen Abweichungen führen kann. Ohne kontinuierliche Translationsmessungen läge das Modell in einem leicht ungenauen Maßstab vor, da dann nur die bekannte Brennweite f der Kamera und die Translationsvektoren $T_p$ und $T_r$ sowie ggf. die Streckenmessung des Panels zum Punkt P am Handgelenk als Maßstabsreferenzen zur Verfügung stehen. Dies würde zu einer geringfügig ungenaueren Maßstabsbestimmung führen, als dies durch die kontinuierlichen Messungen des 3-Achs-Sensors möglich wäre.
Ein leicht ungenauer Maßstab des digitalen 3D-Modells hat jedoch keinen Einfluss auf die Objektauswahl im Modell, sofern sich der Armzeiger im gleichen 3D-Koordinatensystem des Objektraums befindet, auch wenn dieser Maßstab geringfügig fehlerhaft ist. Fachleuten der Photogrammetrie und Robotik ist auch bekannt, dass eine Maßstabsbestimmung alternativ durch die Kamera erfolgen kann, wenn die Kamera Objekte im Objektraum erkennt und deren Länge bekannt ist. Solche Längeninformationen können ebenfalls zur Maßstabsbestimmung verwendet werden.
Das Verfahren kann also grundsätzlich ohne 3-Achs-Sensor durchgeführt werden, benötigt dann jedoch, je nach Gegebenheit und erkannten Referenzlängen im Objektraum, mehr Rechenzeit.
Zur Steigerung der Genauigkeit und Praktikabilität der Objektauswahl kann die Anbringung von Messmarken am Arm des Nutzers beitragen, sofern die tatsächlichen Abstände der Markierungen im Voraus bekannt sind und durch die Kamera erfasst werden können.

**Patentansprüche**

1.  Verfahren zur gestenbasierten Auswahl eines Objekts (115, 116) in einem 3D-Raum mittels eines tragbaren Geräts (100), wobei das tragbare Gerät (100) ein Kameramodul (101) mit zumindest einem Kameraobjektiv und einen Prozessor zur Bildanalyse und für Berechnungen umfasst, umfassend die Schritte:

• Aufnehmen von Bilddaten des 3D-Raums mittels des Kameramoduls (101) des tragbaren Geräts, wobei aus den Bilddaten ein 3D-Bildobjekt-Datenraum erzeugt wird, der Objekte (115, 116) aufweist, welche auswählbare Interaktionselemente repräsentieren;

• Erkennen eines Zeigemittels (105), insbesondere eines Arms eines Nutzers, unter Verwendung der Bilddaten und Erzeugen eines 3D-Zeigemittel-Vektors (110) unter Verwendung der Bilddaten, wobei das Zeigemittel eine definierte Position relativ zum tragbaren Gerät aufweist, wobei der 3D-Zeigemittel-Vektor (110) eine räumliche Richtung des Zeigemittels wiedergibt;

• Zusammenführen des 3D-Bildobjekt-Datenraums und des 3D-Zeigemittel-Vektors in ein gemeinsames Koordinatensystem, wobei der 3D-Zeigemittel-Vektor in dem Koordinatensystem auf ein Objekt (115) des 3D-Bildobjekt-Datenraums zeigt;

• Auswählen dieses Objekts (115), auf das der 3D-Zeigemittel-Vektor zeigt, zur weiteren Verarbeitung durch das tragbare Gerät.

2. Verfahren nach Anspruch 1, wobei der 3D-Bildobjekt-Datenraum durch Aufnahme von Bilddaten des 3D-Raums mittels des Kameramoduls des tragbaren Geräts erzeugt wird, wobei das Kameramodul entweder:

• zwei Objektive umfasst, die synchronisierte, aus unterschiedlichen Blickwinkeln aufgenommene Bilddaten erfassen und aus diesen Bilddaten mittels Triangulation 3D-Informationen des Raums extrahiert werden, oder

• ein einzelnes Objektiv umfasst, das zumindest zwei räumlich und zeitlich versetzte Bilder des 3D-Raums aufzeichnet, wobei durch eine Relativbewegung des tragbaren Geräts zwischen den Bildaufnahmen ein parallaxer Versatz erzeugt wird und aus den versetzten Bildern 3D-Informationen des Raums berechnet werden.

3. Verfahren nach Anspruch 2, wobei eine Translationsbewegung des tragbaren Geräts zwischen dem Aufzeichnen der räumlich versetzten Bilder von einem im tragbaren Gerät integrierten 3-Achs-Sensor erfasst wird, und die erfasste Translationsbewegung zur Berechnung der 3D-Informationen des 3D-Raums herangezogen wird.

4. Verfahren nach einem der Ansprüche 1 bis 3, wobei der 3D-Zeigemittel-Vektor durch Berechnen der Position des Zeigemittels in einem Koordinatensystem des tragbaren Geräts bestimmt wird, indem ein 3D-Modell des Zeigemittels aus den Bilddaten des Kameramoduls rekonstruiert wird, wobei eine vorgegebene Länge des Zeigemittels und mindestens ein gemessener Bildpunkt der Spitze des Zeigemittels verwendet werden, um eine eindeutige 3D-Richtung zu berechnen, die in das Koordinatensystem des tragbaren Geräts transformiert wird.

5. Verfahren nach einem der Ansprüche 1 bis 4, wobei der 3D-Zeigemittel-Vektor unter Verwendung eines am Zeigemittel des Nutzers angebrachten Funksignal-Senders und eines externen Angle-of-Arrival-Panels (120) bestimmt wird, das am Körper des Nutzers angebracht ist und konfiguriert ist, eine Raumrichtung und optional den Abstand zum Funksignal-Sender (125) zu bestimmen, und wobei die Position des Funksignal-Senders relativ zum tragbaren Gerät im 3D-Raum durch die Messdaten des AoA-Panels ermittelt wird.

6. Verfahren nach einem der Ansprüche 1 bis 5, wobei die definierte Position des Zeigemittels relativ zum tragbaren Gerät dem Prozessor durch ein Selfie bekannt gemacht wird, auf dem der Nutzer das tragbare Gerät an einer zur Nutzung vorgesehenen Position trägt.

7. Verfahren nach Anspruch 6, wobei der Nutzer zusätzlich seine Körpergröße bei der Übergabe des Selfies angibt, wodurch es ermöglicht wird, dass alle anderen Proportionen des Nutzers extrapoliert werden können, um den 3D-Zeigemittel-Vektor im Raum und relativ zum tragbaren Gerät zu ermitteln, insbesondere wenn das Zeigemittel der Arm des Nutzers ist.

8. Verfahren nach einem der Ansprüche 1 bis 7, umfassend den Schritt des Kalibrierens des Kameramoduls und des Zeigemittels, indem der Nutzer das Zeigemittel mit spezifischen Abmessungen in die Kamera hält.

9. Verfahren nach einem der Ansprüche 1 bis 8, wobei das tragbare Gerät eine Rückmeldung an den Nutzer gibt, die das ausgewählte Objekt im 3D-Bildobjekt-Datenraum anzeigt.

10. Verfahren nach einem der Ansprüche 1 bis 9, wobei das tragbare Gerät die Richtung des Zeigemittels regelmäßig aktualisiert und das ausgewählte Objekt bei Bewegung des Zeigemittels anpasst.

11. Tragbares Gerät zur gestenbasierten Objektauswahl, umfassend:

• ein Kameramodul mit zumindest einem Kameraobjektiv zur Aufnahme von Bilddaten, das am Träger frontal ausgerichtet ist;
• einen Prozessor, der konfiguriert ist, die Bilddaten des Kameramoduls auszuwerten und einen 3D-Zeigemittel-Vektor zu erzeugen, der auf ein Objekt in einem 3D-Bildobjekt-Datenraum zeigt;
• eine Steuereinheit, die basierend auf der Position des 3D-Zeigemittel-Vektors ein Objekt im 3D-Raum auswählt;
• wobei das tragbare Gerät zur Ausführung der Schritte des Verfahrens nach einem der Ansprüche 1 bis 10 eingerichtet ist.

12. Tragbares Gerät nach Anspruch 11, ferner umfassend eine Schnittstelle zum Empfang von Richtungs- und Entfernungsdaten eines externen Angle-of-Arrival-Panels (AoA-Panel), wobei der Prozessor konfiguriert ist, den 3D-Zeigemittel-Vektor unter Verwendung der Daten des AoA-Panels zu verfeinern.

13. Tragbares Gerät nach Anspruch 11 oder 12, wobei das tragbare Gerät ferner einen 3-Achs-Sensor umfasst, der eine Bewegungsinformation des tragbaren Geräts erfasst und diese dem Prozessor zur Anpassung des 3D-Bildobjekt-Datenraums bereitstellt.

14. Tragbares Gerät nach einem der Ansprüche 11 bis 13, umfassend eine Rückmeldeeinheit, die eine visuelle oder akustische Rückmeldung an den Nutzer über das ausgewählte Objekt bereitstellt.

15. Tragbares Gerät nach einem der Ansprüche 11 bis 14, wobei der Prozessor konfiguriert ist, die Länge des Zeigemittels unter Verwendung von Kalibrierungsdaten zu berechnen und diese zur Genauigkeitssteigerung des 3D-Zeigemittel-Vektors zu verwenden.

**Geänderte Patentansprüche gemäss Regel 137(2) EPÜ.**

1. Verfahren zur gestenbasierten Auswahl eines Objekts (115, 116) in einem 3D-Raum mittels eines tragbaren Geräts (100), wobei das tragbare Gerät (100) ein Kameramodul (101) mit einem Kameraobjektiv und einen Prozessor zur Bildanalyse und für Berechnungen umfasst, umfassend die Schritte:

    • Aufnehmen von Bilddaten des 3D-Raums mittels des Kameramoduls (101) des tragbaren Geräts, wobei aus den Bilddaten ein 3D-Bildobjekt-Datenraum erzeugt wird, der Objekte (115, 116) aufweist, welche auswählbare Interaktionselemente repräsentieren;
    • Erkennen eines Zeigemittels (105), insbesondere eines Arms eines Nutzers, unter Verwendung der Bilddaten und Erzeugen eines 3D-Zeigemittel-Vektors (110) unter Verwendung der Bilddaten, wobei das Zeigemittel eine definierte Position relativ zum tragbaren Gerät aufweist, wobei der 3D-Zeigemittel-Vektor (110) eine räumliche Richtung des Zeigemittels wiedergibt;
    • Zusammenführen des 3D-Bildobjekt-Datenraums und des 3D-Zeigemittel-Vektors in ein gemeinsames Koordinatensystem, wobei der 3D-Zeigemittel-Vektor in dem Koordinatensystem auf ein Objekt (115) des 3D-Bildobjekt-Datenraums zeigt;
    • Auswählen dieses Objekts (115), auf das der 3D-Zeigemittel-Vektor zeigt, zur weiteren Verarbeitung durch das tragbare Gerät,

    wobei das Kameramodul ein einzelnes Objektiv umfasst, das zumindest zwei räumlich und zeitlich versetzte Bilder des 3D-Raums aufzeichnet, wobei durch eine Relativbewegung des tragbaren Geräts zwischen den Bildaufnahmen ein parallaxer Versatz erzeugt wird und aus den versetzten Bildern 3D-Informationen des Raums berechnet werden.

2. Verfahren nach Anspruch 1, wobei eine Translationsbewegung des tragbaren Geräts zwischen dem Aufzeichnen der räumlich versetzten Bilder von einem im tragbaren Gerät integrierten 3-Achs-Sensor erfasst wird, und die erfasste Translationsbewegung zur Berechnung der 3D-Informationen des 3D-Raums herangezogen wird.

3. Verfahren nach einem der Ansprüche 1 oder 2, wobei der 3D-Zeigemittel-Vektor durch Berechnen der Position des Zeigemittels in einem Koordinatensystem des tragbaren Geräts bestimmt wird, indem ein 3D-Modell des Zeigemittels aus den Bilddaten des Kameramoduls rekonstruiert wird, wobei eine vorgegebene Länge des Zeigemittels und mindestens ein gemessener Bildpunkt der Spitze des Zeigemittels verwendet werden, um eine eindeutige 3D-Richtung zu berechnen, die in das Koordinatensystem des tragbaren Geräts transformiert wird.

4. Verfahren nach einem der Ansprüche 1 bis 3, wobei der 3D-Zeigemittel-Vektor unter Verwendung eines am Zeigemittel des Nutzers angebrachten Funksignal-Senders und eines externen Angle-of-Arrival-Panels (120) bestimmt wird, das am Körper des Nutzers angebracht ist und konfiguriert ist, eine Raumrichtung und optional den Abstand zum Funksignal-Sender (125) zu bestimmen, und wobei die Position des Funksignal-Senders relativ zum tragbaren Gerät im 3D-Raum durch die Messdaten des AoA-Panels ermittelt wird.

5. Verfahren nach einem der Ansprüche 1 bis 4, wobei die definierte Position des Zeigemittels relativ zum tragbaren Gerät dem Prozessor durch ein Selfie bekannt gemacht wird, auf dem der Nutzer das tragbare Gerät an einer zur Nutzung vorgesehenen Position trägt.

6. Verfahren nach Anspruch 5, wobei der Nutzer zusätzlich seine Körpergröße bei der Übergabe des Selfies angibt, wodurch es ermöglicht wird, dass alle anderen Proportionen des Nutzers extrapoliert werden können, um den 3D-Zeigemittel-Vektor im Raum und relativ zum tragbaren Gerät zu ermitteln, insbesondere wenn das Zeigemittel der Arm des Nutzers ist.

7. Verfahren nach einem der Ansprüche 1 bis 6, umfassend den Schritt des Kalibrierens des Kameramoduls und des Zeigemittels, indem der Nutzer das Zeigemittel mit spezifischen Abmessungen in die Kamera hält.

8. Verfahren nach einem der Ansprüche 1 bis 7, wobei das tragbare Gerät eine Rückmeldung an den Nutzer gibt, die das ausgewählte Objekt im 3D-Bildobjekt-Datenraum anzeigt.

9. Verfahren nach einem der Ansprüche 1 bis 8, wobei das tragbare Gerät die Richtung des Zeigemittels regelmäßig aktualisiert und das ausgewählte Objekt bei Bewegung des Zeigemittels anpasst.

10. Tragbares Gerät zur gestenbasierten Objektauswahl, umfassend:

   • ein Kameramodul mit zumindest einem Kameraobjektiv zur Aufnahme von Bilddaten, das am Träger frontal ausgerichtet ist;
   • einen Prozessor, der konfiguriert ist, die Bilddaten des Kameramoduls auszuwerten und einen 3D-Zeigemittel-Vektor zu erzeugen, der auf ein Objekt in einem 3D-Bildobjekt-Datenraum zeigt;
   • eine Steuereinheit, die basierend auf der Position des 3D-Zeigemittel-Vektors ein Objekt im 3D-Raum auswählt;
   • wobei das tragbare Gerät zur Ausführung der Schritte des Verfahrens nach einem der Ansprüche 1 bis 9 eingerichtet ist.

11. Tragbares Gerät nach Anspruch 10, ferner umfassend eine Schnittstelle zum Empfang von Richtungs- und Entfernungsdaten eines externen Angle-of-Arrival-Panels (AoA-Panel), wobei der Prozessor konfiguriert ist, den 3D-Zeigemittel-Vektor unter Verwendung der Daten des AoA-Panels zu verfeinern.

12. Tragbares Gerät nach Anspruch 10 oder 11, wobei das tragbare Gerät ferner einen 3-Achs-Sensor umfasst, der eine Bewegungsinformation des tragbaren Geräts erfasst und diese dem Prozessor zur Anpassung des 3D-Bildobjekt-Datenraums bereitstellt.

13. Tragbares Gerät nach einem der Ansprüche 10 bis 12, umfassend eine Rückmeldeeinheit, die eine visuelle oder akustische Rückmeldung an den Nutzer über das ausgewählte Objekt bereitstellt.

14. Tragbares Gerät nach einem der Ansprüche 10 bis 13, wobei der Prozessor konfiguriert ist, die Länge des Zeigemittels unter Verwendung von Kalibrierungsdaten zu berechnen und diese zur Genauigkeitssteigerung des 3D-Zeigemittel-Vektors zu verwenden.

Fig. 1

Fig. 2

Europäisches
Patentamt

European
Patent Office

Office européen
des brevets

# EUROPÄISCHER RECHERCHENBERICHT

Nummer der Anmeldung

EP 24 21 4129

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/278379 A1 (GRIBETZ MERON [US] ET AL) 12. September 2019 (2019-09-12) | 1,2, 9-11,14 | INV. G06F3/042 |
| Y | * 0476; 0395; Ansprüche 2, 5; Abbildung 6 * | 3-6,8, 12,13,15 | G06F3/01 G06F3/03 |
| A | | 7 | G06F3/0346 |
| | ----- | | |
| X | US 10 353 532 B1 (HOLZ DAVID S [US] ET AL) 16. Juli 2019 (2019-07-16) * 0040, 0091, 0092; 0213; Ansprüche 1, 18; Abbildung 2 * | 1,11 | |
| | ----- | | |
| Y | US 2023/071828 A1 (SHIMIZU TAKAYOSHI [JP] ET AL) 9. März 2023 (2023-03-09) * 0085; 0232 * | 3,13 | |
| | ----- | | |
| Y | US 2011/102318 A1 (PATHANGAY VINOD [IN] ET AL) 5. Mai 2011 (2011-05-05) * Anspruch 1 * | 4,15 | |
| | ----- | | |
| Y | WO 2023/059458 A1 (META PLATFORMS TECH LLC [US]) 13. April 2023 (2023-04-13) * Anspruch 6 * | 5,12 | |
| | ----- | | |
| Y | CN 118 192 804 A (BEIJING BAIDU NETCOM SCI & TECH CO LTD) 14. Juni 2024 (2024-06-14) * Absatz [ 0019] - Absatz [ 0019] * | 6 | |
| | ----- | | |
| Y | US 2016/253805 A1 (NACHMAN GEORGE L [US]) 1. September 2016 (2016-09-01) * Anspruch 1; Abbildung 2 * | 8 | |
| | ----- | | |
| A | US 9 569 001 B2 (MISTRY PRANAV [US]; MAES PATRICIA [US] ET AL.) 14. Februar 2017 (2017-02-14) * das ganze Dokument * | 1,11 | |
| | ----- | | |

RECHERCHIERTE SACHGEBIETE (IPC)

G06F

Der vorliegende Recherchenbericht wurde für alle Patentansprüche erstellt

| Recherchenort | Abschlußdatum der Recherche | Prüfer |
|---|---|---|
| München | 18. Dezember 2024 | Halbhuber, David |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 24 21 4129

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-12-2024

| Im Recherchenbericht angeführtes Patentdokument | Datum der Veröffentlichung | Mitglied(er) der Patentfamilie | Datum der Veröffentlichung |
|---|---|---|---|
| US 2019278379 A1 | 12-09-2019 | AU 2014204252 A1 | 06-08-2015 |
| | | CA 2896985 A1 | 10-07-2014 |
| | | CN 105027190 A | 04-11-2015 |
| | | EP 2951811 A2 | 09-12-2015 |
| | | JP 2016509292 A | 24-03-2016 |
| | | JP 2019149202 A | 05-09-2019 |
| | | KR 20150103723 A | 11-09-2015 |
| | | US 2014184496 A1 | 03-07-2014 |
| | | US 2018095541 A1 | 05-04-2018 |
| | | US 2019278379 A1 | 12-09-2019 |
| | | US 2020393910 A1 | 17-12-2020 |
| | | US 2022083144 A1 | 17-03-2022 |
| | | US 2022253150 A1 | 11-08-2022 |
| | | US 2023161418 A1 | 25-05-2023 |
| | | US 2023376121 A1 | 23-11-2023 |
| | | WO 2014106823 A2 | 10-07-2014 |
| US 10353532 B1 | 16-07-2019 | US 10353532 B1 | 16-07-2019 |
| | | US 2019391724 A1 | 26-12-2019 |
| | | US 2021165555 A1 | 03-06-2021 |
| | | US 2024094860 A1 | 21-03-2024 |
| | | US 2024361877 A1 | 31-10-2024 |
| US 2023071828 A1 | 09-03-2023 | CN 115004132 A | 02-09-2022 |
| | | EP 4099275 A1 | 07-12-2022 |
| | | JP 7544071 B2 | 03-09-2024 |
| | | JP WO2021153413 A1 | 05-08-2021 |
| | | US 2023071828 A1 | 09-03-2023 |
| | | WO 2021153413 A1 | 05-08-2021 |
| US 2011102318 A1 | 05-05-2011 | KEINE | |
| WO 2023059458 A1 | 13-04-2023 | EP 4413446 A1 | 14-08-2024 |
| | | US 2023259207 A1 | 17-08-2023 |
| | | WO 2023059458 A1 | 13-04-2023 |
| CN 118192804 A | 14-06-2024 | KEINE | |
| US 2016253805 A1 | 01-09-2016 | US 2015170367 A1 | 18-06-2015 |
| | | US 2016253805 A1 | 01-09-2016 |
| US 9569001 B2 | 14-02-2017 | KEINE | |

EPO FORM P0461

Für nähere Einzelheiten zu diesem Anhang : siehe Amtsblatt des Europäischen Patentamts, Nr.12/82